# EUROPEAN PATENT SPECIFICATION

(11) **EP 1 250 787 B1**
(45) Date of publication and mention of the grant of the patent: **07.06.2006**
(21) Application number: 01902910.7
(22) Date of filing: 25.01.2001
(51) Int. Cl.: H04L 29/06, H04L 12/56, H04Q 11/04

(54) **RSVP HANDLING IN 3G NETWORKS**
RSVP-VERARBEITUNG IN 3G-NETZWERKEN
TRAITEMENT DE RSVP DANS LES RESEAUX 3G

(30) Priority: 25.01.2000 US 178086 P; 24.01.2001 US 768956
(43) Date of publication of application: 23.10.2002
(73) Proprietor: TELEFONAKTIEBOLAGET LM ERICSSON (publ), 164 83 Stockholm (SE)
(72) Inventor: FODOR, Gabor, S-165 57 Hässelby (SE); OYAMA, Johnson; c/o Robertsson, 169 68 Solna (SE); WIDEGREN, Ina, S-117 31 Stockholm (SE); WILLIAMS, Brian, Melbourne, vic 3088 (AU)
(74) Representative: Tonscheidt, Andreas
(86) International application number: PCT/SE2001/000145
(87) International publication number: WO 2001/056250

(56) References cited:
- EP-A2- 0 790 751
- EP-A2- 0 917 390
- WO-A1-99/50999

## Description

### CROSS-REFERENCE TO A RELATED APPLICATION

This application is related to, and claims priority from, U.S. Provisional Application Serial No. 60/178,086 entitled "Processing RSVP Signalling in the MT" filed on January 25, 2000, the disclosure of which is incorporated herein by reference.

### BACKGROUND

This application generally relates to Internet Protocol ("IP") networks and more specifically to Quality of Service ("QoS") provisioning mechanisms in IP networks.

Originally, IP networks were designed to carry "best effort" traffic. That is, the network did not guarantee that a user packet would arrive at the destination. Because of the market success of IP networks, there is today a clear requirement for mechanisms that allow IP networks to support various types of applications. Some of these applications have QoS requirements. Examples of such applications include various real time applications (IP Telephony, video conferencing), streaming services (audio or video), or high quality data services (browsing with bounded download delays). Recognizing these requirements, the Internet Engineering Task Force ("IETF"), which is the main standards body for IP networking, recently standardized a set of protocols and mechanisms that enable IP network operators to build QoS-enabled IP networks.

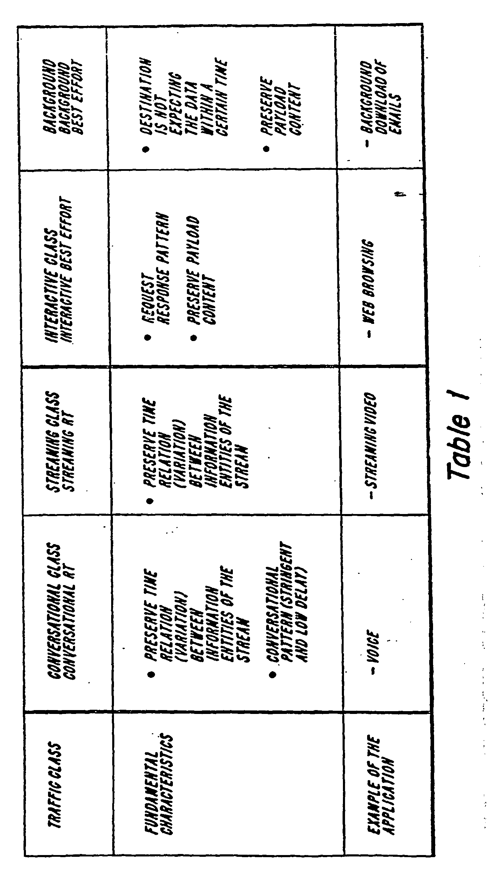

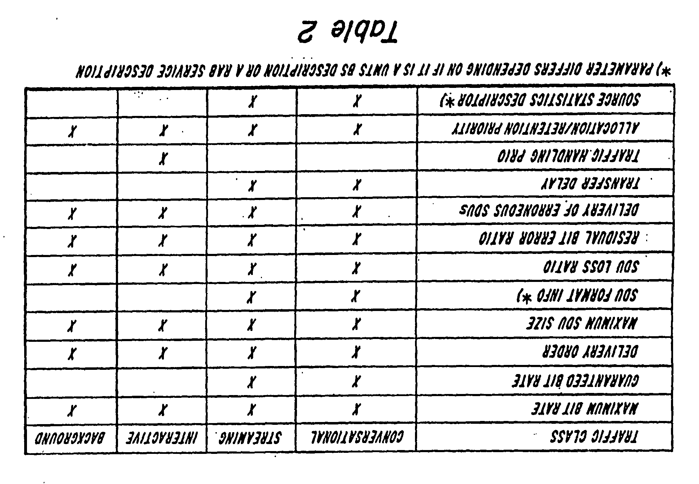

Figure 1 depicts a simplified high-level model of an IP network which may be useful in explaining QoS provisioning. As can be appreciated, the model includes two users, but could easily be expanded to include more users without changing the basic functionality of the network.

In Figure 1, User-A 101 may communicate with User-B 102 or with an application server 103. For example, in the case of an IP telephony session, User-A 101 may communicate with User-B 102. Similarly, in the case of streaming services, User-A 101 may communicate with the application server 103, which may be configured as a video server. In either case, User-A 101 accesses an IP backbone network 104 through a local access network 105, such as a telephone, GSM, or UMTS network. User-B 102 is similarly connected to the IP network 104 through local access network 106. It will be appreciated that User-A and User-B need not use the same type of access network, however.

As is generally known, the IP network 104 may consist of a number of IP routers and interconnecting links that together provide connectivity between the IP network's ingress and egress points and thereby make two party communication possible.

As far as the users are concerned, the perceived QoS depends on the mechanisms both in the access networks 105, 106 and on the IP backbone network 104. Of particular interest is the specific case where at least one of the access networks is a UMTS network.

When users access IP based services, they typically use a device that runs an application program that provides the interface for the user to access the particular service. For instance, in Figure 1, User-A may use a laptop running a conferencing application program to attend an IP network based meeting, where participants of the meeting collaborate using various programs. Such programs are well known in the art.

Various applications may access network services through an application programming interface ("API"). An API provides application programmers with a uniform interface to access underlying system resources. For instance, an API may be used to configure the network resource manager to require that a particular IP packet originating from a given application receive a certain treatment from the network, such as a particular QoS. For example, if the IP network is a Differentiated Services IP network, then an application program may request that all of its IP packets receive the "Expedited Forwarding" treatment.

Note that the User (and the API in the user's equipment) may not be aware of the different technologies that various access networks and IP backbone networks employ in order to provide end-to-end QoS. For instance, the user may use an RSVP/IntServ based API and the end-to-end embodiment in which the user is involved may include a UMTS access network and a non-RSVP enabled IP network. In such cases, some interworking mechanisms between the various technologies may be needed to make sure that QoS is provided end-to-end.

Integrated Services ("IntServ") provide the ability for applications to choose among multiple, controlled levels of delivery service for their data packets. To support this capability, two things are required. First, individual network elements, such as subnets and IP routers, along the path followed by an application's data packets must support mechanisms to control the quality of service delivered to those packets. Second, a way to communicate the application's requirements to network elements along the path and to convey QoS management information between network elements and the application must be provided.

IntServ defines a number of services such as Controlled-Load (defined in IETF RFC. 2211) and Guaranteed (defined in IETF RFC 2212). The service definition defines the required characteristics of the network equipment in order to deliver the service. For example, guaranteed service provides firm, mathematically-provable bounds on end-to-end datagram queuing delays and makes it possible to provide a service that guarantees both delay and bandwidth. Controlled-load service provides the client data flow with a quality of service closely approximating the QoS that the same flow would receive from an unloaded network element, but uses capacity (admission) control to assure that this service is received even when the network element is overloaded. The individual network elements (subnets and IP routers) that support the service must comply with the definitions defined for the service.

The service definition also defines the information that must be provided across the network in order to establish the service. This function may be provided in a number of ways, but is frequently implemented by a resource reservation setup protocol such as RSVP (defined in IETF RFC 2205).

RSVP (Resource reSerVation Protocol) is a resource reservation setup protocol designed for an IntServ Internet (defined in IETF RFC 1633, 2205, and 2210). The RSVP protocol is used by a host to request specific qualities of service from the network for particular application data streams or flows. RSVP is also used by routers to deliver quality-of-service ("QoS") requests to all nodes along the path(s) of the flows and to establish and maintain state to provide the requested service. RSVP requests will generally result in resources being reserved in each node along the data path.

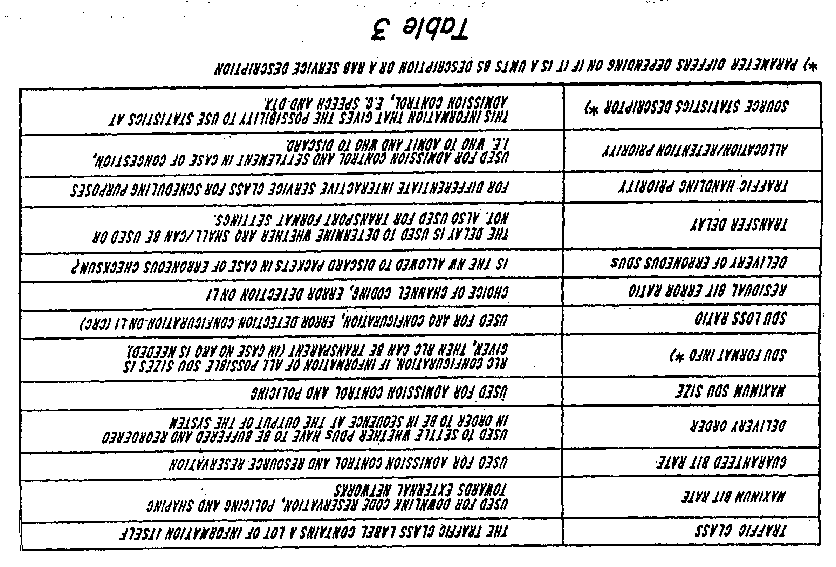

Figure 2 shows the End-to-End Integrated Service between the hosts. The service is provided using routers and hosts that support the service definition defined for the required service and through signaling of the relevant information between the nodes.

Since RSVP is a protocol that is primarily designed to be end-to-end, some extra functionality is required in a situation where the sender would like to use RSVP for resource reservation in only some portion of the end-to-end path. This may arise if RSVP is used in an access network and over-provisioning is used in the backbone network. In such situations the concept of the RSVP Proxy is useful.

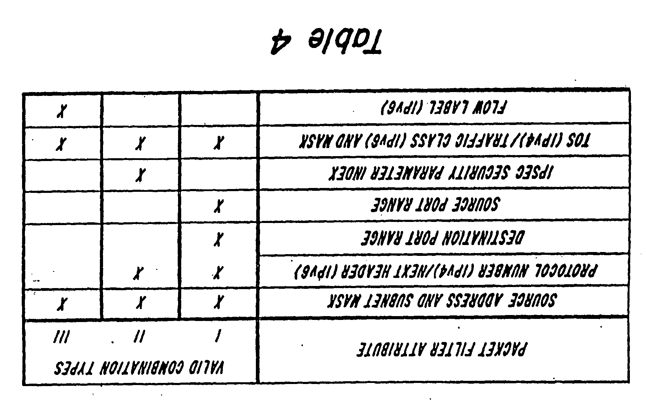

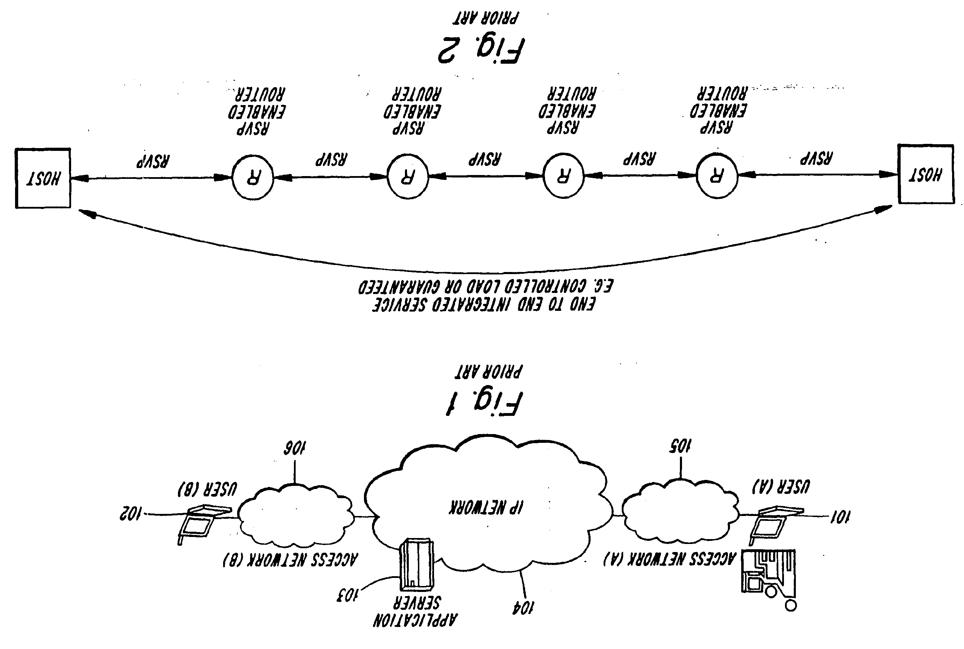

The RSVP Proxy is a functionality provided by a network device, such as a router or a switch, in which the network device originates the RESV message in response to an incoming PATH message on behalf of one or more receivers identified by the PATH message. In other words, the RSVP Proxy acts on behalf of the remote host and thereby facilitates resource reservation between the originating host and the RSVP Proxy. This is shown in Figure 3. The RSVP Proxy may use knowledge of network conditions between the RSVP Proxy and the non-RSVP host.

Differentiated Services ("DiffServ") enhancements to the Internet protocol are intended to enable scalable service discrimination in the Internet without the need for per-flow state and signaling at every hop. A variety of services may be built from a small, well-defined set of building blocks which are deployed in network nodes. The services may be either end-to-end or intra-domain; the services include those that can satisfy quantitative performance requirements (e.g., peak bandwidth) and those based on relative performance (e.g., "class" differentiation). Services may be constructed by a combination of setting bits in an IP header field at network boundaries (autonomous system boundaries, internal administrative boundaries, or hosts), using those bits to determine how packets are forwarded by the nodes inside the network, and conditioning the marked packets at network boundaries in accordance with the requirements or rules of each service.

Differentiated Services defines an edge router at the network boundary, and core routers within the network. The edge and core routers have different duties. The edge router must condition the traffic to ensure that the traffic conforms to the service agreement. The edge router also marks the packet traffic with the appropriate Differentiated Services Code Point ("DSCP") and then forwards the packets according to the service, behavior defined for that DSCP. The service behavior, called the Per Hop Behavior ("PHB") may define the prioritization or weighting of that type of traffic to give the traffic better service than other traffic of a different type. The core nodes examine the DSCP and apply the service behavior appropriate for that service.

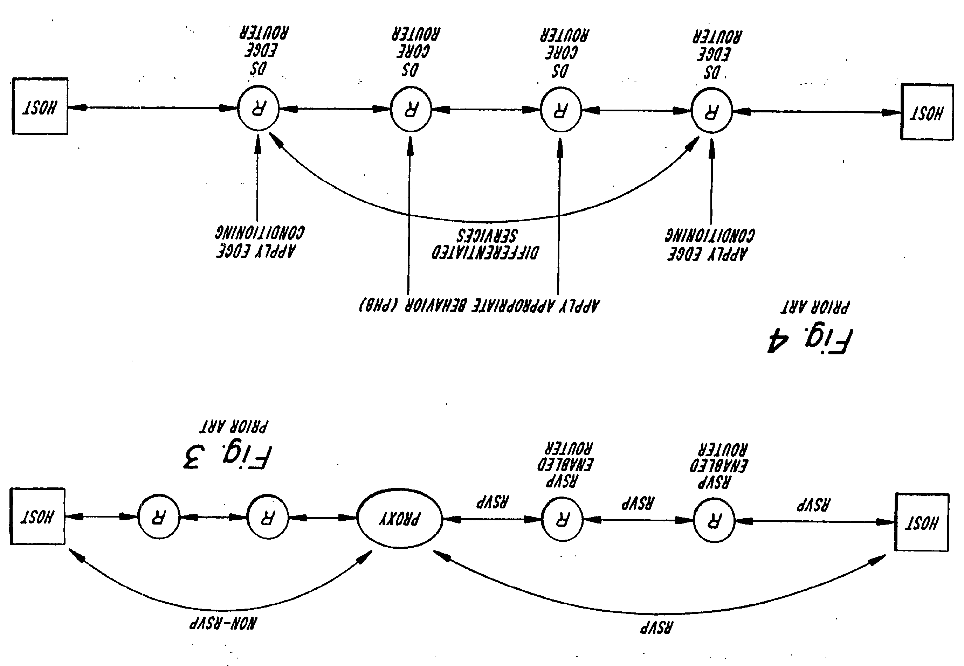

Figure 4 shows the end-to-end service. The DS edge routers perform the traffic conditioning, while the DS core routers simply apply the PHB.

The IntServ architecture provides a means for the delivery of end-to-end QoS to applications over heterogeneous networks. To support this end-to-end model, the IntServ architecture must be supported over a wide variety of different types of network elements. In this context, a network that supports Differentiated Services may be viewed as a network element in the total end-to-end path.

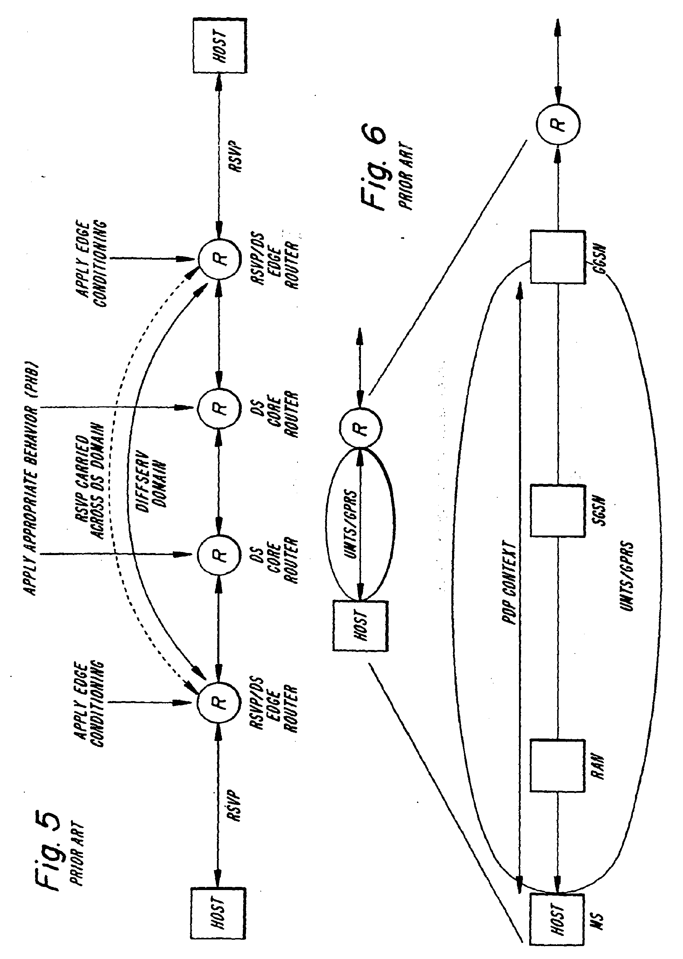

From the perspective of IntServ, DiffServ regions of the network are treated as virtual links connecting IntServ capable routers or hosts (much as an ethernet LAN can be treated as a virtual link). Within the DiffServ regions of the network, routers implement specific PHBs (aggregate traffic control). The total amount of traffic that is admitted into the DiffServ region that will receive a certain PHB is controlled by the conditioning at the edge routers. An IntServ service can be provided across a DiffServ domain by applying admission control and traffic conditioning at the edge router, and signaling using RSVP across the DiffServ domain. The information provided in the RSVP signaling should be appropriate for the service across the DiffServ domain. This is shown in Figure 5.

To realize a QoS Bearer Service with clearly defined characteristics and functionality, the bearer must be set up from the source to the destination of the service. A bearer service includes all aspects to enable the provision of a contracted QoS. These aspects are among others the control signaling, user plane transport, and QoS management functionality.

Mobile Access Data Networks including General Packet Radio Service ("GPRS") and Universal Mobile Telecommunication System ("UMTS") may form a part of the overall network and play an important role in the end-to-end bearer service for customers connected to it. Hence, the service provided over the GPRS/UMTS network must be suitable in the:aspects mentioned above of control signaling and user plane transport to provide the required end-to-end bearer service.

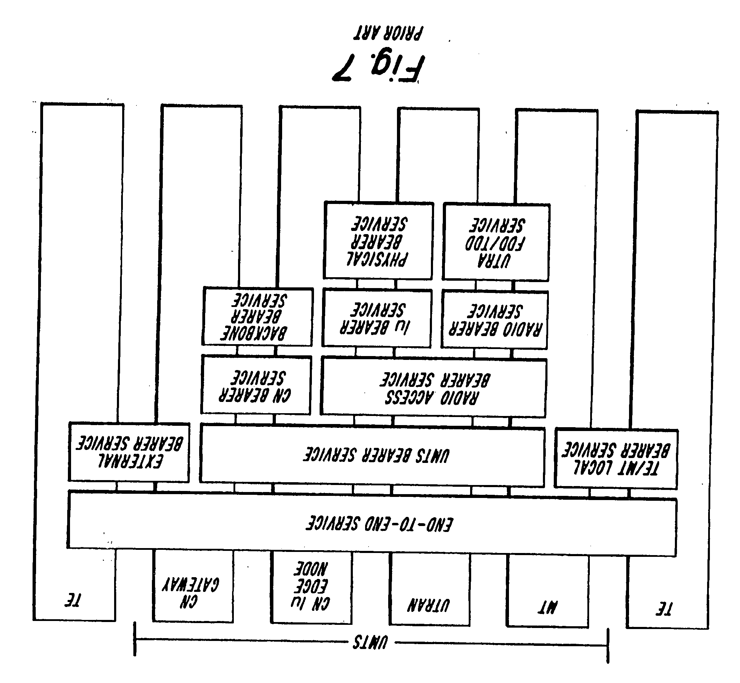

The GPRS/UMTS network consists of a of set of network elements between the host, referred to as the Mobile Station ("MS"), and the external packet switching network the user is connecting to. These nodes are shown in Figure 6.

The Gateway GPRS Support Node ("GGSN") provides the interworking with external packet-switched networks.

In order to send and receive packet-switched ("PS") data, the MS shall activate the Packet Data Protocol context that the MS wants to use. This operation makes the MS known in the corresponding GGSN and interworking with external data networks can commence.

User data is transferred transparently between the MS and the external data networks with a method known as encapsulation and tunneling: data packets are equipped with PS-specific protocol information and transferred between the MS and the GGSN.

Quality of Service ("QoS") has an extremely important and central role in 3G mobile networks as well. QoS is a means for providing end users with satisfying service and also is essential for network management in terms of knowledge. QoS implies knowledge of the traffic in the network and thus QoS also enables efficient use of the spectrum resources.

The invention will be described in terms of a UMTS QoS architecture. Accordingly, in order to provide a uniform level of understanding, a state-of-the-art overview of QoS in UMTS is provided. The 3GPP UMTS QoS architecture is described, including an explanation of the packet data protocol context ("PDP context"), the traffic flow template ("TFT"), and the QoS maintenance procedures for activated UMTS bearers.

It is expected that bandwidth associated with radio is the most expensive and precious resource in the end-to-end chain. Within UMTS access networks, the radio network resources are managed on a per PDP context granularity which corresponds to a user flow and a certain QoS level.

The QoS framework for R99 3G networks is specified in TS23.107 V.3.4.0. The main focus is on the QoS architecture to be used in the UMTS level, where the list of QoS attributes applicable to UMTS Bearer Service and the Radio Access Bearer Service are specified along with appropriate mapping rules.

TS23.060 V.3.4.0 specifies the general mechanisms used by R99 3G networks for PS connectivity services in the UMTS level. This defines the service description for the packet domain of the 3G network, which includes the General Packet Radio Service ("GPRS") in GSM and UMTS.

In a UMTS QoS Architecture, network services are considered end-to-end, from a Terminal Equipment ("TE") to another TE. An End-to-End Service may have a certain Quality of Service, which is provided to the user of a network service.

To realize a certain network QoS, a Bearer Service with clearly defined characteristics and functionality is set up from the source to the destination of a service. The bearer service includes all aspects to enable the provision of a contracted QoS, e.g., control signaling, user plane transport, QoS management functionality, etc.

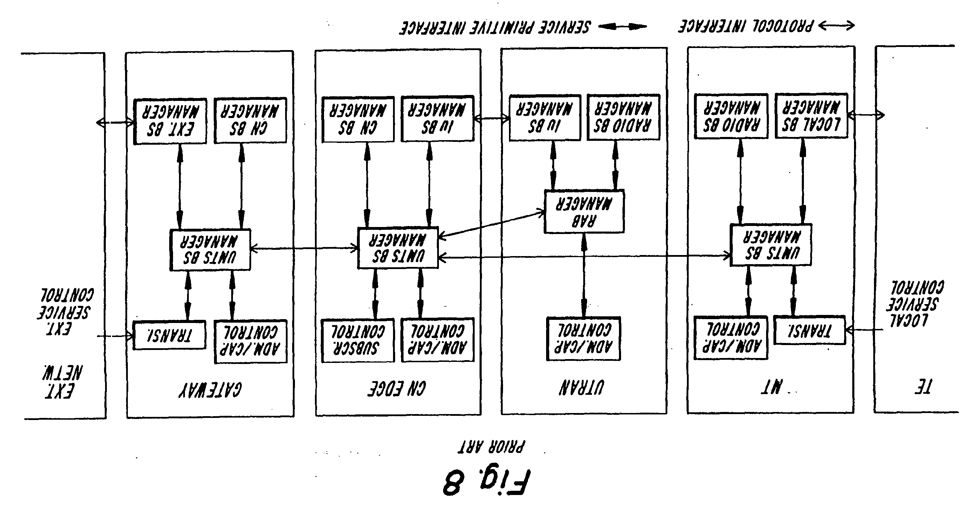

A UMTS bearer service layered architecture is depicted in Figure 7. Each bearer service on a specific layer offers its individual services using services provided by the layers below. Bearers are broken down into underlying bearers, each one providing a QoS by a realization that is independent of the other bearers. Service agreements are made between network components, which are arranged horizontally in Figure 7. The service agreements may be executed by one or more layers of service.

For instance, the UMTS bearer service consists of a Radio Access Bearer ("RAB") service and a Core Network ("CN") bearer service. The RAB service is then divided into a radio bearer service and a Iu bearer service. The Iu interface is the interface between the radio access network and the core network.

The following are examples of the entities shown in Figure 7. The terminal equipment ("TE") may be a laptop and the mobile terminal ("MT") may be a handset. The UTRAN may be made up of a combination of Node B and a radio network controller ("RNC"). The CN Iu Edge Node may be a serving GPRS support node ("SGSN") and the CN Gateway may be a gateway GPRS support node ("GGSN").

The QoS management functions in UMTS are used to establish, modify and maintain a UMTS Bearer Service with a specific QoS, as defined by specific QoS attributes. The QoS management functions of all UMTS entities combined ensure the provision of the negotiated UMTS bearer service.

The UMTS architecture comprises four management functions in the control plane and four in the user plane. The control plane management functions are:
Bearer Service ("BS") Manager, which sets up, controls, and terminates the corresponding bearer service. Each BS manager also translates the attributes of its level to attributes of the underlying bearer service during service requests.

Translation function, which converts between external service signaling and internal service primitives including the translation of the service attributes, and is located in the MT and in the GW.

Admission/Capability control, which determines whether the network entity supports the specific requested service, and whether the required resources are available.

Subscription Control, which determines whether the user has the subscription for the bearer being requested.

The user plane management functions are:
Mapping function, which marks each data unit with the specific QoS indication related to the bearer service performing the transfer of the data unit. For example, the mapping function may adds DiffServ code points to packets before putting the packets on the Iu- or CN bearer.
Classification function, which resides in the GGSN and in the MT, assigns user data units (e.g. IP packets) received from the external bearer service (or the local bearer service) to the appropriate UMTS bearer service according to the QoS requirements of each user data unit. This is where the traffic flow template ("TFT") and packet filters are situated, as described below.
Resource Manager, which distributes its resources between all bearer services that are requesting use of these resources. The resource manager attempts to provide the QoS attributes required for each individual bearer service. An example of resource manager is a packet scheduler.
Traffic conditioner, which is a shaping and policing function which provides conformance of the user data traffic with the QoS attributes of the concerned UMTS bearer service. This resides in the GGSN and in the MT as well as in the UTRAN.

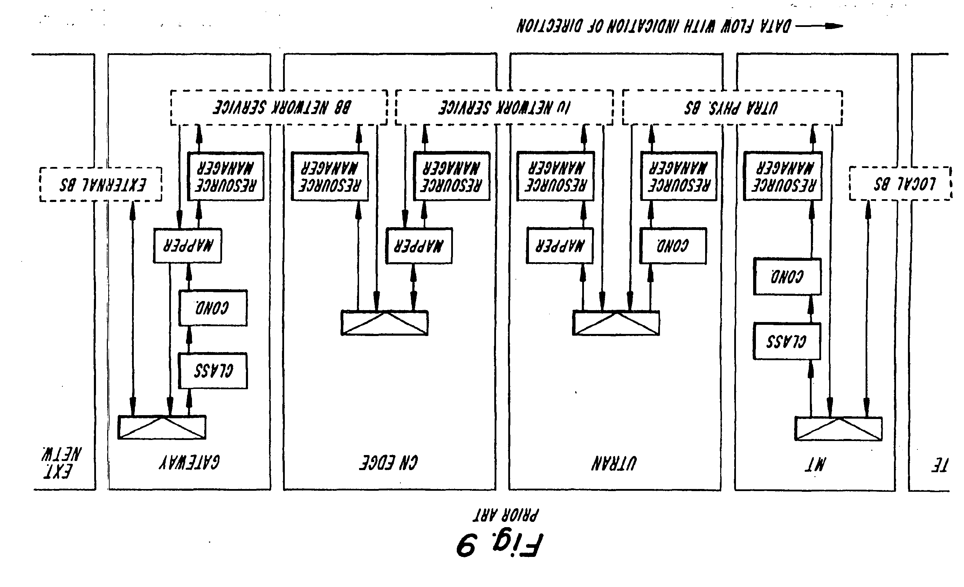

The QoS management functions for controlling the UMTS bearer service are shown in Figure 8. The purpose of these control functions is to support establishment and modification of UMTS bearer services through interaction with the Local Service Control in the TE, and the External Service Control in the External Network.

The QoS management functions of the UMTS bearer service in the user plane are shown in Figure 9. These functions together maintain the data transfer characteristics according to the commitments established by the UMTS bearer service control functions, expressed by the bearer service attributes. The user plane uses the QoS attributes. The relevant attributes are provided to the user plane management functions by the QoS management control functions.

Four different QoS classes are standardized in UMTS and are shown in Table 1. Data transport may be optimized for the corresponding type of application data or for a bearer service of a certain class. The main distinguishing factor between these classes is how delay sensitive the traffic is: Conversational class is meant for traffic which is very delay sensitive (for real-time services) while Background class is the most delay insensitive traffic class (for non-real time services).

To characterize a bearer service in detail, a set of bearer service attributes are standardized in UMTS as shown in the tables below. A certain QoS is requested by selecting a set of attribute values that describes the bearer requirement. Parameters differ depending on the type of bearer service requested.

Table 2 shows which attributes that are applicable to which traffic class. Table 3 provides an overview of what the different QoS attributes are used for. The exact definitions of the QoS attributes can be found in TS23.107, which is currently at version 3.4.0.

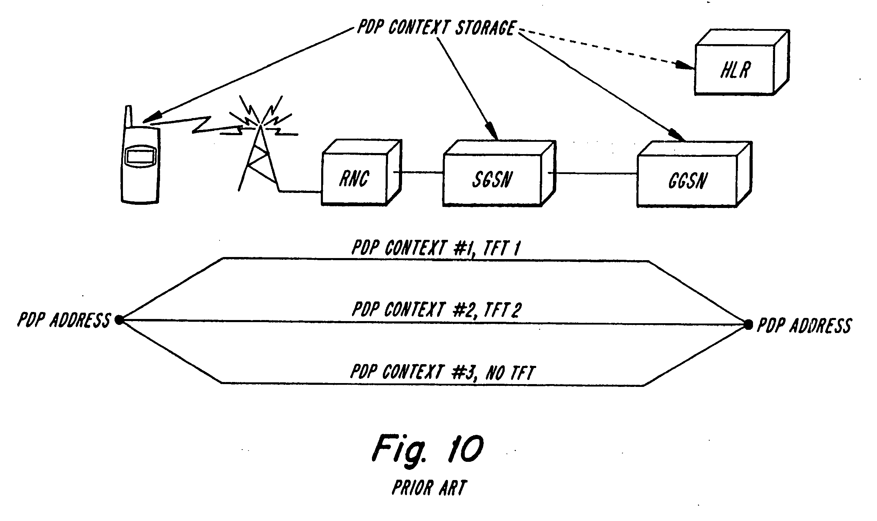

A subscription is associated with one or more Packet Data Protocol ("PDP'') addresses, i.e. IP addresses in the case of IP traffic. Each PDP address is described by one or more PDP contexts stored in the MS, the SGSN, and the GGSN. Default values are also available in the HLR which holds the subscription information. Each PDP context may be associated with a Traffic Flow Template ("TFT"). At most one PDP context (associated with the same PDP address) may exist at any time with no TFT assigned to it. The relationship between PDP address, PDP context, and TFT is provided in Figure 10.

A PDP context is a dynamic table of data entries, comprising all needed information for transferring PDP PDUs between MS and GGSN, for example addressing information, flow control variables, QoS profile, charging information, etc. The relation between UMTS bearer services and PDP context is a one to one mapping, i.e. if two UMTS bearer services are established for one PDP address, two PDP contexts are defined.

The PDP context procedures are standardized in TS23.060, which is currently at version 3.4.0. The concepts surrounding the QoS profile and the Traffic Flow Template: ("TFT") are relevant from the QoS perspective.

The UMTS QoS attributes have been selected and defined mainly for supporting efficient radio realization. A QoS profile is defined by a set of UMTS QoS attributes. The RNC obtains the pertinent RAB QoS profile from the SGSN during PDP context activation. There are three different QoS profiles involved in a PDP context activation - the requested QoS profile, the negotiated QoS profile, and the subscribed QoS profile (or the default QoS profile).

Depending on the type of information needed, the stored PDP context information differ in the MS, RNC, SGSN, GGSN, and HLR. With respect to the QoS profile, the following applies:
GGSN: Negotiated QoS profile
MS: Negotiated QoS profile, Requested QoS profile, and Subscribed QoS profile.
SGSN: Negotiated QoS profile, Requested QoS profile and Subscribed QoS profile.
RNC: Negotiated RAB QoS profile.
HLR: Subscribed QoS profile

A TFT is a packet filter (or set of filters) that associates packets to the correct PDP context, ensuring that packets are forwarded in the appropriate GTP tunnel. The TFT enables the possibility of having several PDP contexts with varying QoS profiles, associated to a single PDP address. The TFT is managed and initiated by the MT both for the uplink and downlink flows. The uplink TFT resides in the MT, while the downlink TFT resides in the GGSN. The downlink TFT is sent from the MT to the GGSN during PDP context activation / modification. The downlink TFT's may be added to a PDP context that was created without one, and the contents may be modified as well.

Table 4 shows the TFT packet filter attributes and valid combinations. Each TFT has an identifier and an evaluation precedence index that is unique within all TFT's associated with the PDP contexts that share the same PDP address. The MS manages the identifiers and the evaluation precedence indexes of the TFT's, and as well as the packet filter contents.

Some of the attributes in Table 4 may coexist in a packet filter while others mutually exclude each other. Only those attributes marked with an "X" may be specified for a single packet filter. All marked attributes may be specified, but at least one has to be specified.

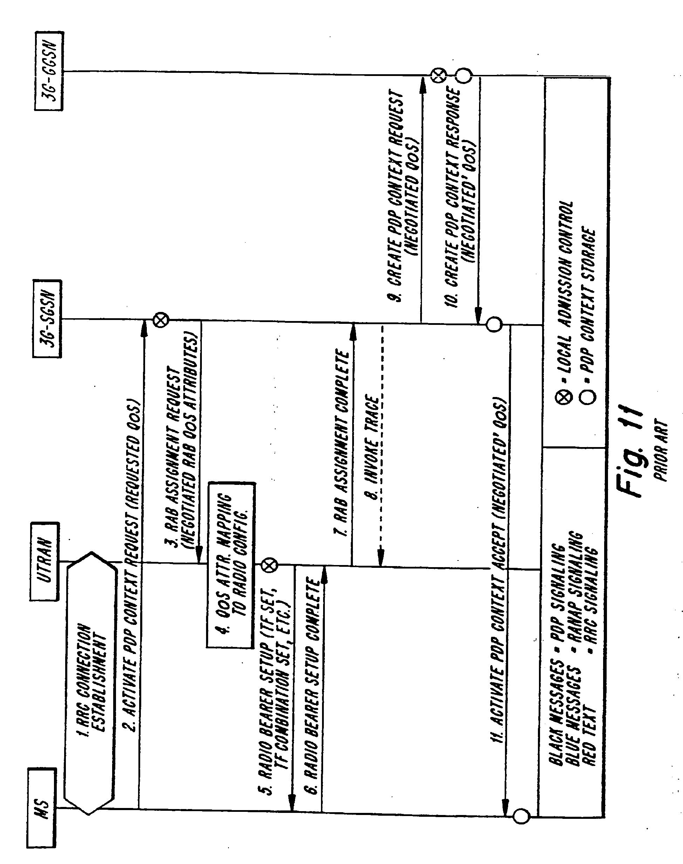

The PDP context signaling is the means for carrying the requested and negotiated QoS profile between the nodes in the UMTS network. PDP context signaling has a central role for QoS handling in terms of admission control, negotiation, and modifying of bearers on a QoS level. The PDP context signaling message exchanges are described below with reference to the numerals in Figure 11.

In step 1, an RRC connection is established. This procedure is needed to establish a connection between the MS and the UTRAN. However, from a QoS perspective, the establishment phase typically does little more than indicating the type of radio channel that is being used.

In step 2, the MS sends a PDP message to the SGSN to activate the PDP context. The requested QoS profile is included in this message. At this stage, the SGSN makes an admission check and might restrict the requested QoS if the system is overloaded.

In step 3, the SGSN sends a RANAP message, "RAB Assignment Request", to the RNC. RANAP, or radio access network application part, is an application protocol for supporting signaling and control transmission between the Radio Access Network ("RAN") and the external CN. RANAP permits communication between the RAN and circuit-switched or packet-switched networks. This request to establish a radio access bearer service carries the RAB QoS attributes, which may have been modified by the SGSN.

In step 4, the RNC uses the RAB QoS attributes to determine the radio related parameter corresponding to the QoS profile. These parameters may include transport format set and transport format combination set. In addition, the UTRAN performs an admission control on this bearer.

In step 5, the RNC sends an RRC message, "Radio Bearer Set-up," to the MS. The RRC message includes the radio related parameters that were determined in step 4.

In step 6, the UTRAN and the MS apply the radio parameters and are ready to transfer traffic. To signal this, the MS sends a "Radio Bearer Set-up Complete" RRC message to the RNC.

In step 7, the UTRAN sends a "RAB Assignment Complete" RANAP message to the SGSN.

In step 8, a Trace procedure may be initiated. This is an operation and maintenance function for surveying subscribers.

In step 9, the SGSN sends a "Create PDP Context Request" to the GGSN, carrying the QoS profile. However, the QoS profile may have different parameters than those requested by the MS in step 2. Based on this profile, an admission control is performed at the GGSN level and the GGSN may restrict the QoS if, for example, the system is overloaded. The GGSN stores the PDP context in its database.

In step 10, the GGSN returns the negotiated QoS to the SGSN in a "Create PDP Context Response" message and the SGSN stores the PDP context in its database.

In step 11, the negotiated QoS is sent from the SGSN to the MS in a "Activate PDP Context Accept" message. If either the SGSN or the GGSN has modified the QoS profile, then the MS has to either accept or reject this profile.

There are several local admission controls taking place in the procedure. However, since bandwidth associated with radio is the most expensive resource; the UTRAN is consulted in determining whether radio resources are available or not during PDP context activation or modification. Thus, admission control in UMTS is performed in a radio centric manner.

To provide IP QoS end-to-end, it is necessary to manage the QoS within each domain. An LP BS Manager in the Gateway is used to control the external IP bearer service. Due to the different techniques used within the IP network, this communicates to the UMTS BS manager through the Translation function.

There is a likewise a need for an IP bearer service manager function to be provided in UE, where the bearer service manager maps the QoS requirements of the application to the appropriate QoS mechanisms.

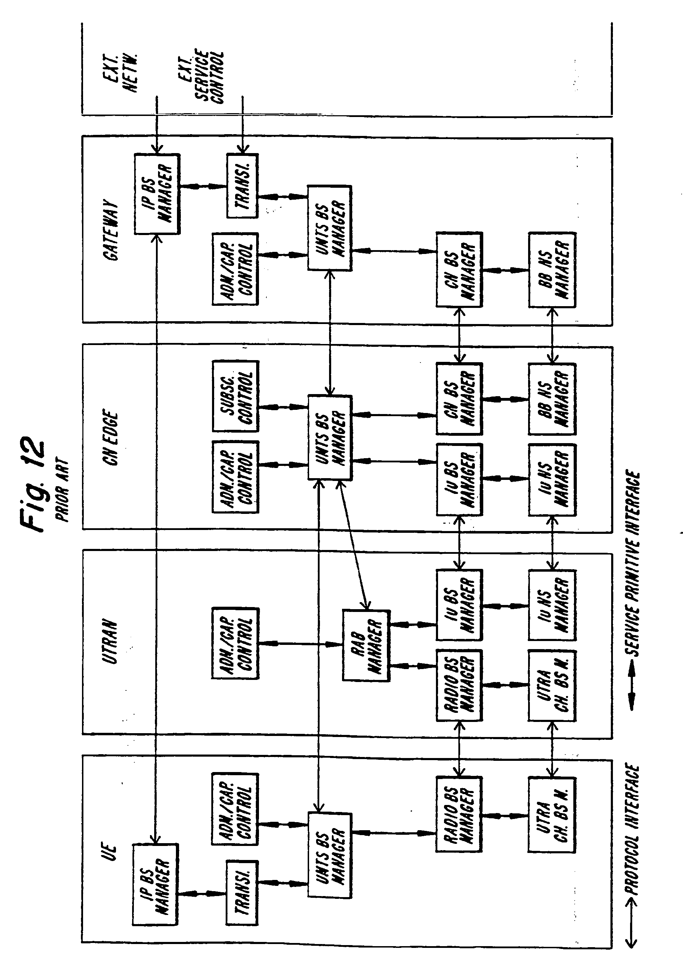

Figure 12 shows the embodiment for control of an IP service using IP BS Managers in both possible locations in the UE and Gateway node. The figure also indicates the optional communication path between the IP BS Managers in the UE and the Gateway node.

The IP BS Managers use standard IP mechanisms to manage the IP bearer service. These mechanisms may be different from mechanisms used within the UMTS, and may have different parameters controlling the service. The translation/mapping function provides the interworking between the mechanisms and parameters used within the UMTS bearer service and those used within the IP bearer service, and interacts with the IP BS Manager.

If an IP BS Manager exists both in the UE and the Gateway node, it is possible that these IP BS Managers communicate directly with each other by using relevant signaling protocols.

Although IP level signaling, such as RSVP, can be useful to provide end-to-end significance of a QoS enabled request from the end-user, it has a number of drawbacks. Among them are poor radio resource efficiency, service definition may not be appropriate for heterogeneous networks, and the procedures may not be appropriate for bi-directional flows. Accordingly, there is a need to provide IP level signaling in radio networks while avoiding these deficiencies.

### SUMMARY

The invention addresses a number of the shortcomings of the prior art by using a proxy method in a radio network, such as UMTS. A solution for RSVP support and interworking is provided.

In the context of the invention, interworking includes the mapping of information in one protocol to information in another protocol. The information may include a traffic descriptor or a QoS definition. Interworking may also include using events in the state machine of one side of the interworking to trigger actions in the function of the other side of the interworking Further interworking may involve using information received at the ingress side of the interworking to configure shaping/marking of the egress side of the interworking.

In accordance with the present invention, a method in a mobile terminal for providing support for IP signaling, wherein the mobile terminal is in communication with a local user's terminal equipment and is also in communication with a radio network. The method comprises the steps of: terminating a PATH message transmitted by the user's terminal equipment; determining whether to create a new PDP context or modify an existing PDP context based on the RSVP parameters contained in the PATH message; and transmitting a request to create or modify the PDP context through the radio network.

In accordance with another aspect of the present invention, there is a method in a mobile terminal for providing support for IP signaling, wherein the mobile terminal is in communication with a local user's terminal equipment and is also in communication with a radio network. The method comprises the steps of receiving a message from the radio network; determining from the message whether an application in the terminal equipment requires RSVP signaling; generating a PATH message; transmitting the PATH message to the terminal equipment; receiving a RESV message from the terminal equipment; determining requirements for a PDP context; and transmitting a request to create or modify the PDP context through the radio network.

In accordance with another aspect of the present invention, there is a method in a mobile terminal for providing support for IP signaling, wherein the mobile terminal is in communication with a local user's terminal equipment and is also in communication with a radio network. The method comprises the steps of: receiving a PATH message transmitted by the user's terminal equipment; modifying the PATH message according to a local configuration; transmitting the modified PATH message to the radio network; receiving a RESV message from the radio network in response to the PATH message; determining whether to create a new PDP context or modify an existing PDP context based on RSVP parameters contained in the RESV message; transmitting a request to create or modify the PDP context through the radio network; receiving a response to the request to create or modify a PDP context from the radio network; and transmitting the RESV message to the terminal equipment.

In accordance with another aspect of the present invention, there is a method in a mobile terminal for providing support for IP signaling, wherein the mobile terminal is in communication with a local user's terminal equipment and is also in communication with a radio network. The method comprises the steps of: receiving a PATH message from the radio network; transmitting the PATH message to the terminal equipment; receiving a RESV message from the terminal equipment: determining from the RESV message the requirements for a PDP context; transmitting a request to create or modify the PDP context through the radio network; receiving a response to the request to create or modify the PDP context from the radio network; and transmitting the RESV message to the radio network.

In accordance with another aspect of the present invention, there is a method to include IP QoS information in a PDP context and to carry the QoS information through a UMTS network. The method comprises the steps of: including the QoS information in the PDP context; and interworking between the QoS information and RSVP in a GGSN.

It should be emphasized that the term "comprises" or "comprising," when used in this specification, is taken to specify the presence of stated features, integers, steps, or components, but does not preclude the presence or addition of one or more other features, integers, steps, components, or groups thereof.

### DESCRIPTION OF THE DRAWINGS

Figure 1 is a block diagram of an high level IP network;
Figure 2 is a block diagram depicting an example of a network employing end-to-end integrated services;
Figure 3 is a block diagram depicting an example of a network employing an RSVP proxy;
Figure 4 is a block diagram depicting an example of a network employing end-to-end differentiated services;
Figure 5 is a block diagram depicting an example of a network employing RSVP signaling interworking with differentiated services;
Figure 6 is a block diagram depicting a Mobile Access Data Network modeled as a DiffServ;
Figure 7 is a block diagram of a UMTS QoS architecture;
Figure 8 is a block diagram depicting QoS management function for UMTS bearer service in the control plane;
Figure 9 is a block diagram depicting QoS management functions for UMTS bearer service in the user plane;
Figure 10 is a block diagram of the relationship between PDP address, PDP context, and TFT;
Figure 11 is a diagram of PDP context message exchanges;
Figure 12 is a block diagram of the QoS management functions for UMTS bearer service in the control plane and QoS management functions for end-to-end IP QoS;
Figure 13 is a diagram depicting IP signaling that is transparent to the UMTS network
Figure 14 is a diagram depicting IP signaling that is interpreted in the GGSN;
Figure 15 is a functional block diagram of the first embodiment of the invention;
Figure 16 is a message flow diagram of the first embodiment of the invention in which the MT receives a PATH message from the TE;
Figure 17 is a message flow diagram of the first embodiment of the invention in which the MT receives data from the network;
Figure 18 is a functional block diagram of the second embodiment of the invention;
Figure 19 is a message flow diagram of the second embodiment of the invention in which the MT receives a PATH message from the TE;
Figure 20 is a message flow diagram of the second embodiment of the invention in which the MT receives a PATH message from the network;
Figure 21 is a functional block diagram of the third embodiment of the invention;
Figure 22 is a message flow diagram of the third embodiment of the invention in which the MT receives a PATH message from the TE;
Figure 23 is a message flow diagram of the third embodiment of the invention in which the MT receives a PATH message from the network;
Figure 24 is a message flow diagram of the third embodiment of the invention defining the establishment phase and data phase;
Figure 25 is a signal flow diagram in which the UE supports IP specific elements in the PDP context message and the GGSN provides interworking with RSVP;
Figure 26 is a functional block diagram of the fourth embodiment of the invention;
Figure 27 is a schematic diagram of a network model incorporating the fourth embodiment of the invention;
Figure 28 is a message flow diagram of the fourth embodiment of the invention in which the GGSN invokes RSVP messages for uplink flow;
Figure 29 is a message flow diagram of the fourth embodiment of the invention in which the GGSN terminates and invokes RSVP messages for downlink flow;
Figure 30 is a message flow diagram showing the phases of bearer setup; and
Figure 31 is a signal flow diagram in which the UE supports IP specific elements in the PDP context message and the GGSN provides interworking with DiffServ.

### DETAILED DESCRIPTION

Although IP level signaling, such as RSVP. can be used to provide end-to-end significance of a QoS enabled request from the end-user it has exhibited a number of shortcomings.

The invention addresses a number of the shortcomings associated with IP level signaling over radio networks by using a proxy method. Accordingly, IP level signaling methods, such as RSVP, can be used over a radio network, such as UMTS, without wasting valuable radio bandwidth. As can be appreciated, the IP level signaling may be transparent to the UMTS network or the IP level signaling may be interpreted in the GGSN. Before discussing the invention in terms of its embodiments, it is useful to discuss the interworking principles involved in these two IP signaling cases.

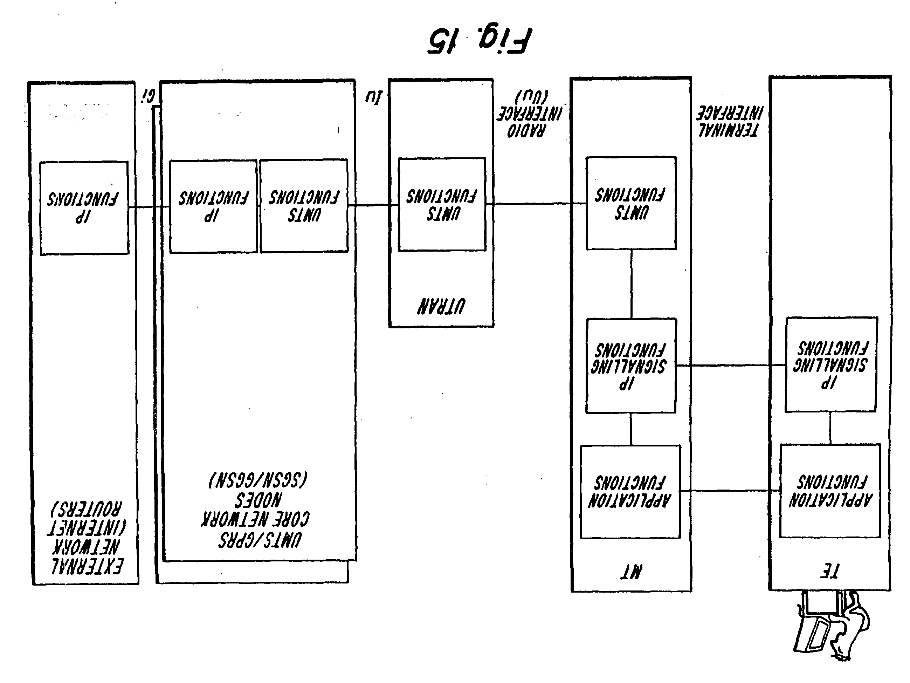

Figure 15 depicts a functional block diagram of a network configuration between the user's terminal equipment ("TE") and the external network. As shown in the diagram, the user's TE is connected to the mobile terminal ("MT"). The TE may be any one of a variety of known computing devices, such as a portable computer or a personal data assistant. The MT handles the interface to the communication network, such as a UMTS or other radio network. As can be appreciated, the MT may be physically integrated into the TE or may be connected to the TE using cabling, infrared link, or some other method.

The UTRAN, or UMTS Radio Access Network, terminates the radio link from the MT. The UTRAN handles the tasks associated with maintaining the physical link to the MT and is not aware of applications which may be running on the TE or MT. Similarly, the UTRAN is not aware of network subscribers.

The UTMTS/GPRS core network node provides routing and access to the external Internet. Thus, data sent through UMTS is received and appropriately formatted for transmission onto the IP network. Likewise, data received from the IP network is appropriately formatted for transmission through the UMTS.

Figure 15 also shows a number of functions associated with each of the nodes. Application functions generally include any application that requires a communication path and may be executed by the TE or the MT. Examples of common application functions are web browsers, multi-media clients, and audio tools.

Also within the TE and MT are IP signaling functions. These functions handle IP level signaling, such as RSVP.

UNITS functions handle the tasks associated with communicating on a UMTS network. These tasks may include PDP mobility management, link management, radio resource management, and handover procedures.

IP functions include IP routing which may be required in order to forward IP packets in an IP network.

While Figure 15 only shows the network node from the TE to the external network, it will be appreciated that the user will likely desire to connect to another user's TE or some application server. This second TE or server may be connected to the external network in the same or similar manner as shown in Figure 15.

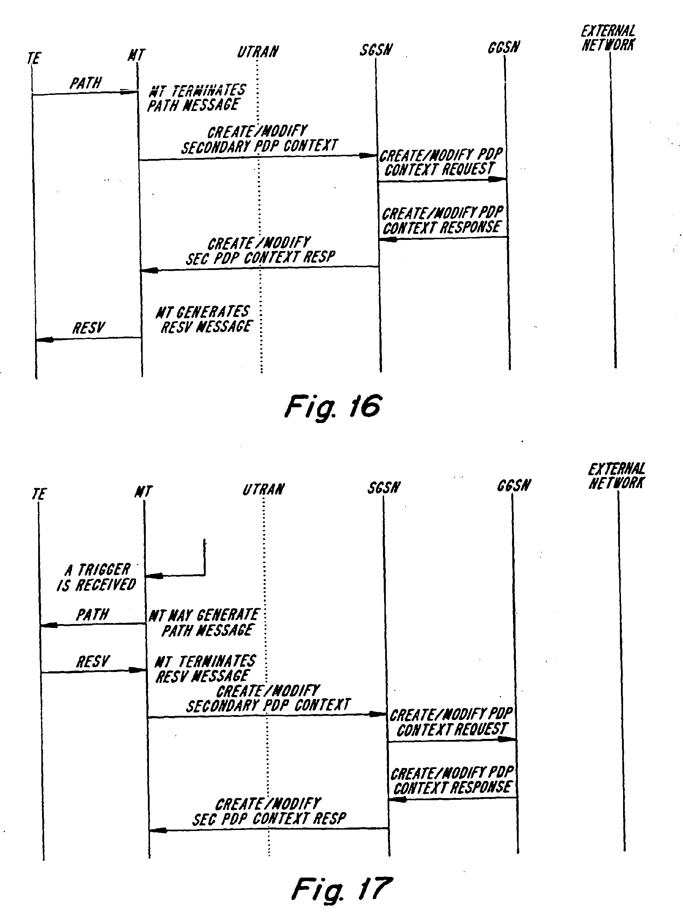

In one embodiment of the invention, the IP signaling is terminated in the MT. Figure 16 is a message flow diagram where the TE initiates a PATH message and the MT terminates the RSVP signaling. When the PATH message is received, the MT receives all of the RSVP parameters and determines whether to create a new secondary PDP context or to modify an existing one to carry the traffic. The secondary PDP context is then created or modified in a manner defined by standards and known to the art.

Once the secondary PDP context is successfully established, the MT may instantiate a RSVP proxy. The RSVP proxy may be in a mode where the RSVP proxy terminates the signaling. In this mode, the RSVP proxy may receive a PATH message and generate a RESV response. The MT may also respond to the initial PATH message with a RESV message.

Figure 17 is a corresponding message flow diagram where the MT terminates the RSVP signaling and there is incoming data from the external network. In this case, the MT initiates the PATH message. For the MT to initiate the RSVP PATH, there must be some action that occurs to trigger this. The trigger could result from receiving data in an existing secondary PDP context which matches some filter specification which identifies this traffic should be provided a different QoS. Another possibility is if the user configures the MT (either directly or through an API from the TE) to prepare for an expected data stream.

If the MT determines that the application requires RSVP signaling, then the MT initiates a PATH message. On receiving the RESV message from the TE, the requirements for the PDP context can be determined, and the secondary PDP context can be created/modified.

The MT must also run timers appropriate for the RSVP procedures. For example, in response to the periodic expiration of the timer, the MT may transmit a PATH message to the TE. The MT must be configured to determine what action to take if the RESV message is not received from the TE. For example, the MT may determine that the application is no longer running on the TE and the communication path defined by the PDP context is no longer needed.

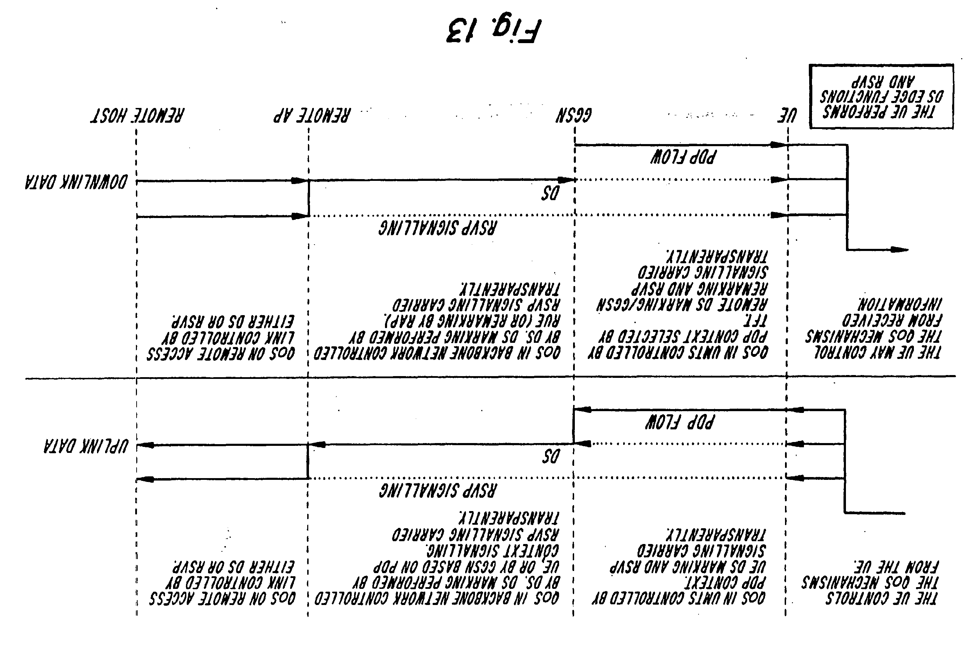

As can be appreciated, this embodiment allows for the interworking of two different protocols. Figure 13 shows the interworking principles in the case where the IP signaling (RSVP) is transparent for the UMTS network. In this case, the UE, which may include both the TE and the MT, provides an IP Bearer Service ("BS") function which enables end-to-end QoS using IP layer signaling towards the remote end. There is no IP layer signaling between the IP BS Managers in the UE and the GGSN. However, the GGSN may make use of information regarding the PDP context which is signaled between the UMTS BS managers and provided through the translation/mapping function.

In Figure 13, it is assumed that the UE and GGSN support DiffServ edge functions and that the backbone IP network is DiffServ enabled. In addition, the UE may support RSVP signaling, which interworks within the UE to control the DiffServ.

The control of the QoS over the UMTS access network (from the UE to the GGSN) may be performed from the terminal using the PDP context signaling. Alternatively, subscription data accessed by the SGSN may override the QoS requested via signaling from the UE.

The terminal may support signaling via the RSVP protocol to control the QoS at the local and remote accesses. The terminal may also support DiffServ to control the IP QoS through the backbone IP network. The RSVP signaling protocol may be used for different services. It is expected that only RSVP using the Integrated Services ("IntServ") semantics would be supported, although in the future, new service definitions and semantics may be introduced. The entities that support the RSVP signaling may fully support the specifications for IntServ and IntServ/DiffServ interwork as well. If not, they are expected to set the break bit.

The QoS for the wireless access is provided by the PDP context. The UE may control the wireless QoS through signaling for the PDP context. The characteristics for the PDP context may be derived from the RSVP signaling information, or may use other information.

QoS for the IP layer is performed at two levels. The end-to-end QoS is controlled by the RSVP signaling. Although RSVP signaling can be used end-to-end in the QoS model, it is not necessarily supported by all intermediate nodes. Instead, DiffServ is used to provide the QoS throughout the backbone IP network.

At the UE, the data is also classified for DiffServ. Intermediate QoS domains may apply QoS according to either the RSVP signaling information or DiffServ mechanisms. In this embodiment, the UE provides interworking between the RSVP and DiffServ domains. The GGSN may override the DiffServ setting from the UE. This GGSN may use information regarding the PDP context in order to select the appropriate DiffServ setting to apply, as shown in Figure 13.

The end-to-end QoS is provided by a local mechanism in the UE. the PDP context over the UMTS access network, DiffServ through the backbone IP network, and Diffserv in the remote access network, which are also shown in Figure 13. The RSVP signaling may control the QoS at both the local and remote accesses. This function may be used to determine the characteristics for the PDP context, so the UE may perform the interwork between the RSVP signaling and PDP context.

The UE may provide control of the DiffServ, although this may be overwritten by the GGSN. In effect, the UE determines the appropriate interworking between the PDP context and DiffServ.

In this embodiment, the interworking may be accomplished by mapping information in one protocol to information in another protocol. For example, in the case where the TE originates the PATH message, the traffic descriptor in the RSVP PATH is mapped to various UMTS attributes and the QoS definition in the UMTS attributes is mapped to the RSVP RESV response. Likewise, in the case where the MT originates the PATH message, the traffic descriptor may be configured in the MT or information generated by the application function in the MT may be mapped to the RSVP PATH. The QoS definition in the RSVP RESV may be mapped to the UMTS attributes.

The interworking may also be accomplished by using events in the state machine of one protocol to trigger actions in functions implementing the other protocol. For example, in the case where the TE originates the PATH message, reception of the PATH message may trigger the creation or modification of a secondary PDP context. Reception of create/modify PDP context response triggers generation of RSVP RESV and is also a condition for the generation of RSVP RESV with indication that the flow is accepted. Similarly, in the case where the MT originates the PATH message, a trigger generated by the application function in the MT activates RSVP PATH. Reception of create/modify PDP context response triggers the start of RSVP soft state message generation.

This embodiment allows standard applications in a TE, such as a lap-top running a network enabled operating system, such as Microsoft Windows, to use a standard IP signaling mechanism, such as RSVP. Normally, this type of mechanisms will require extra overhead, which may unduly load the radio network. In this embodiment, the IP signaling does not have to be sent over the radio network, which results in the radio resources being optimized. This is specifically important when using RSVP signaling because RSVP signaling must regularly generate soft state information for keep alive and other purposes.

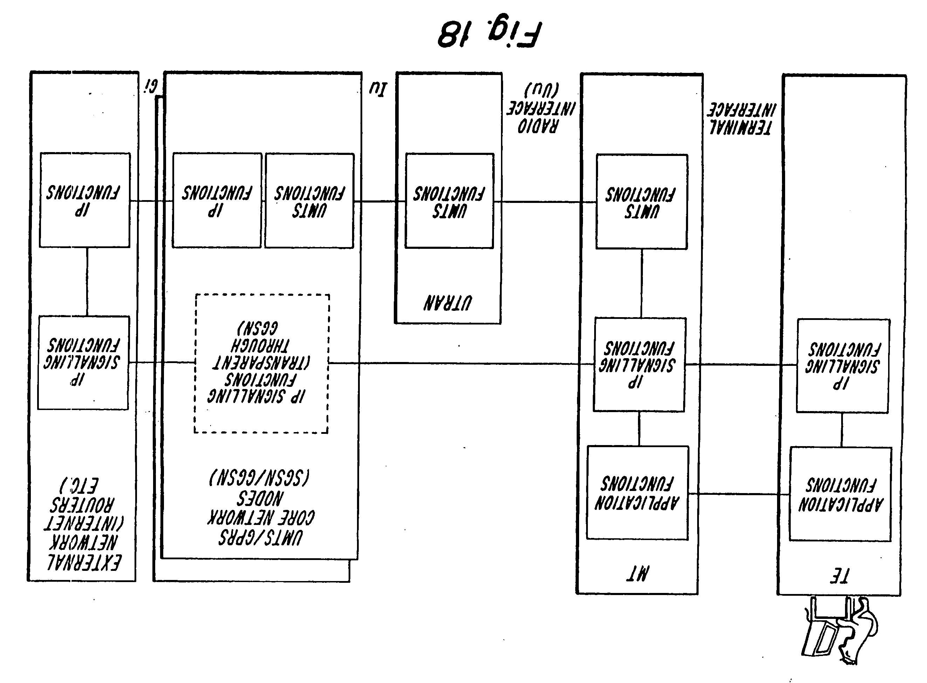

Figure 18 depicts a functional block diagram of a network configuration between the user's terminal equipment ("TE") and the external network. This figure includes many of the components previously described in relation to Figure 15. In Figure 18, the IP signaling is used end-to-end. Accordingly, IP signaling functions have been added to the UMTS/GPRS core network notes and to the external network. As before, the remote end, which may be another user or an external application server, may be similarly connected to the external network.

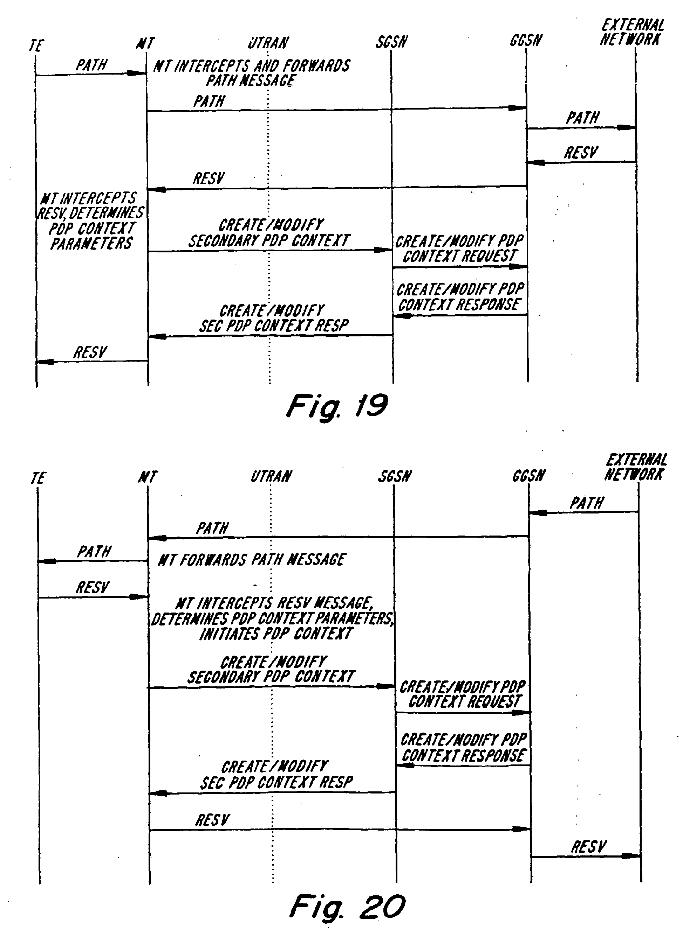

The network configuration shown in Figure 18 may be accommodated by an alternate embodiment of the invention. In this embodiment, the IP signaling is transmitted to the remote side. Figure 19 is a message flow diagram in which the MT intercepts the incoming PATH message from the TE. When the MT receives the PATH message, the MT may modify the PATH parameters to correspond to a local configuration. The PATH message is then forward to the network. When the RESV response is received by the MT, the MT uses the information in the RESV response, along with the relevant local configuration, to finally determine the parameters required for the PDP context. The MT then creates or modifies a PDP context to reflect these network parameters and the adapted RESV message is sent on to the TE. In this way, the various network components can modify the service parameters based on available resources.

Figure 20 is a corresponding message flow diagram in which the MT passes through the PATH message from the external network, but intercepts the RESV response from the TE. When the PATH message is received over the radio interface, the PATH message is passed along to the TE. When the TE responds with the RESV message, the MT intercepts and may modify the RESV parameters to correspond to a local configuration. The MT may also create or modify a PDP context to reflect these desired network parameters. The request to create or modify a PDP context is forwarded to the network to establish the PDP context. Once the PDP context is established, the modified RESV message is passed on.

As can be appreciated, this embodiment allows for the interworking of two different IntServ services or two instances of the same service with different parameters. This interworking may be accomplished by mapping information in one protocol to information in another protocol. For example, in the case where the TE originates the PATH message, the resulting RESV message contains various UMTS attributes used in to create or modify the PDP context. The UMTS attributes in the received create/modify PDP context response are mapped to corresponding parameters in the RESV message and sent to the TE. Similarly, in the case where the MT receives the PATH message from the network, the corresponding RESV message received from the TE contains parameters which are mapped to various UMTS attributes and used to generate a create or modify PDP context message. The UMTS attributes received from the network in the create/modify PDP context response are mapped to parameters in the RESV message, which is transmitted through the network. In this manner, traffic descriptor and QoS parameters may be mapped from one protocol to another.

The interworking may also be accomplished by using events in the state machine of one protocol to trigger actions in functions implementing the other protocol. For example, in the case where the TE originates the PATH message, receiving the RESV message at the MT triggers the generation of a create or modify PDP context message. Successful reception of RESV message is also a condition for the generation of create/modify PDP context message. Similarly, reception of a create or modify PDP context response in the MT triggers generation of the RESV message sent to the TE and is also a condition for the generation of RESV message with an indication that the flow is accepted. Likewise, for the case where the PATH message is received over the network, receipt of a RESV message at the MT triggers the generation of a create or modify PDP context message. When the MT receives a create/modify PDP context response, this event triggers a RESV message being sent to remote side. Successful reception of the create/modify PDP context response is also a condition for the generation of RESV message with indication that the flow is accepted. Reception of the PATH message may trigger the creation or modification of a secondary PDP context. Reception of a create/modify PDP context response triggers generation of RSVP RESV and is also a condition for the generation of RSVP RESV with indication that the flow is accepted.

This embodiment allows standard applications running on a TE, such as lap-tops with a network-enabled operating system, such as Microsoft Windows, to use a standard IP signaling mechanism such as RSVP. The RSVP signaling is allowed to interwork with UMTS signaling in the MT and is transmitted end-to-end to allow remote equipment to interact with the UMTS system and terminals. Accordingly, this embodiment provides end-to-end handling for control of end-to-end user flows.

One potential disadvantage of this embodiment is the need to continue to support end-to-end RSVP signaling after the PDP context has been established. As previously noted, support of RSVP signaling requires the transport of periodic PATH messages and RESV responses. This can result in the inefficient use of radio bandwidth.

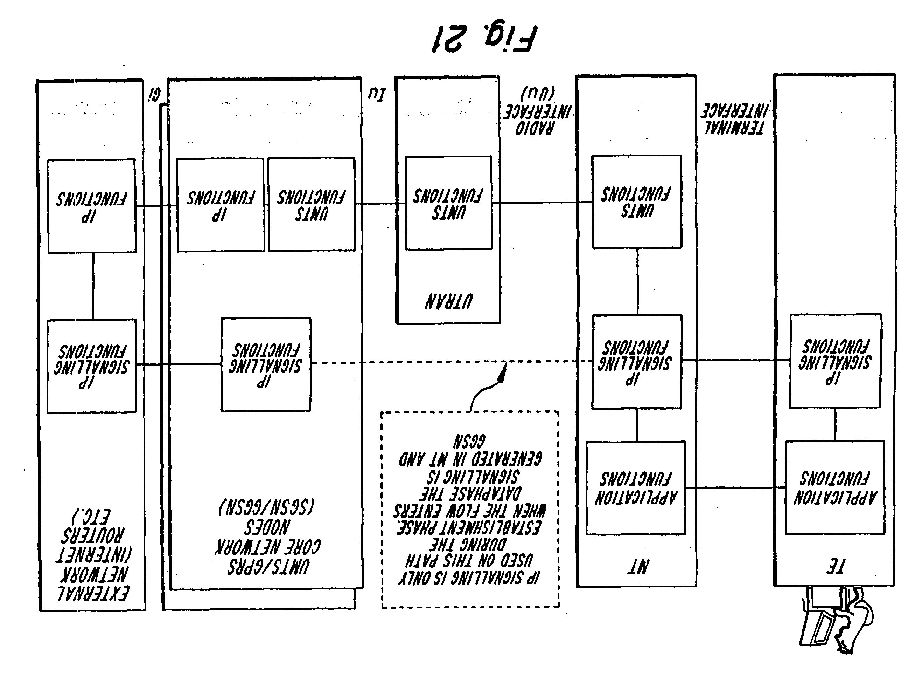

Figure 21 depicts a functional block diagram of a network configuration between the user's terminal equipment ("TE") and the external network. This figure includes many of the components previously described in relation to Figures 15 and 17. In Figure 21, the IP signaling path between the MT and UMTS/GPRS core network node is only used during PDP context establishment. As separate procedure is used by the MT and GGSN during the data phase. As before, the remote end, which may be another user or an external application server, may be similarly connected to the external network.

The network configuration shown in Figure 21 may be accommodated by an alternate embodiment of the invention. In this embodiment, the RSVP session is used end-to-end. However, an RSVP proxy in a performance enhancement mode is inserted at the MT and Gateway. The aim of the proxy in this mode is to change the nature of the RSVP session from a soft state to a hard state between the two proxies by utilizing the secondary PDP context. This improves the reliability of the RSVP session, as well as reducing the amount of signaling over the radio interface.

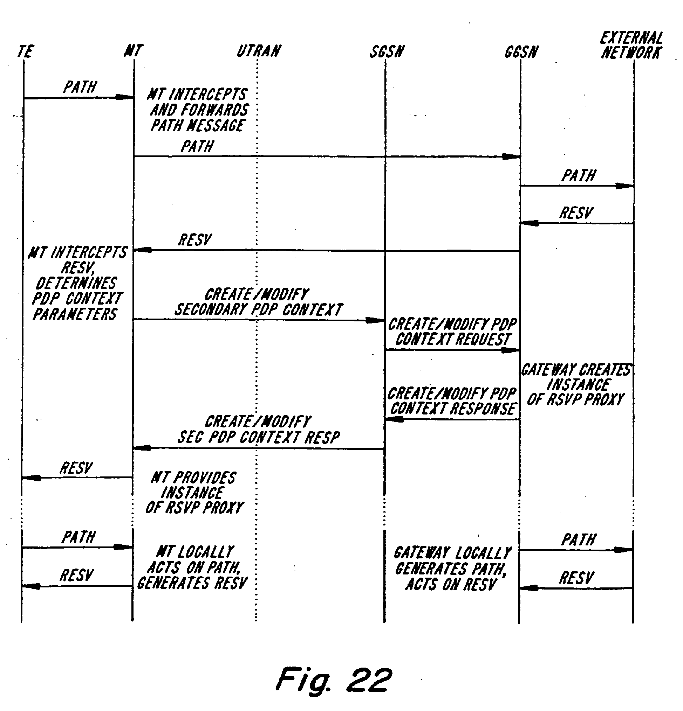

Figure 22 is a message flow diagram which reflects the case where the MT utilizes the RSVP proxy to forward RSVP signaling in response to an incoming PATH message from TE. As in the previous embodiment, when the MT receives the PATH message, the MT may modify the PATH parameters to correspond to a local configuration. The PATH message is then forward to the network. When the RESV response is received by the MT, the MT uses the information in the RESV response, along with the relevant local configuration, to finally determine the parameters required for the PDP context. The MT then creates or modifies a PDP context to reflect these network parameters and the adapted RESV message is sent on to the TE.

At the reception of the secondary PDP context request, an RSVP proxy service is instantiated. This instance of the RSVP proxy service is associated with the RSVP session toward the external network, as per normal RSVP signaling. Once the secondary PDP context and the proxy service are established, the RESV is then passed on to the TE as before. After this point, the PATH messages received at the MT are responded to locally, and PATH messages are periodically generated at the Gateway. Only if there are changes in the RSVP session is the updated PATH or RESV message transferred to the other proxy.

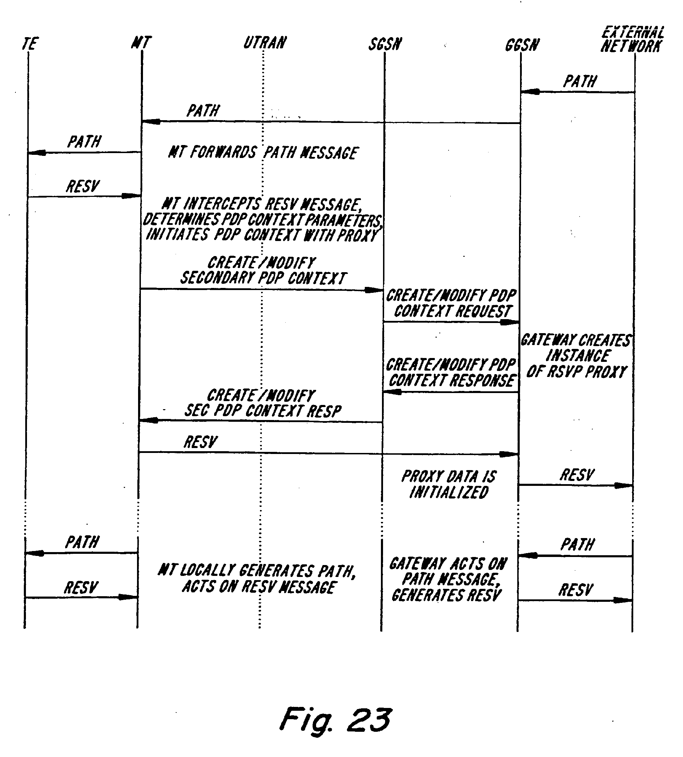

For the RSVP session from the external network, the sequence is similar to the end-to-end with the exception of the local proxy being installed with the PDP context. This is shown in Figure 23.

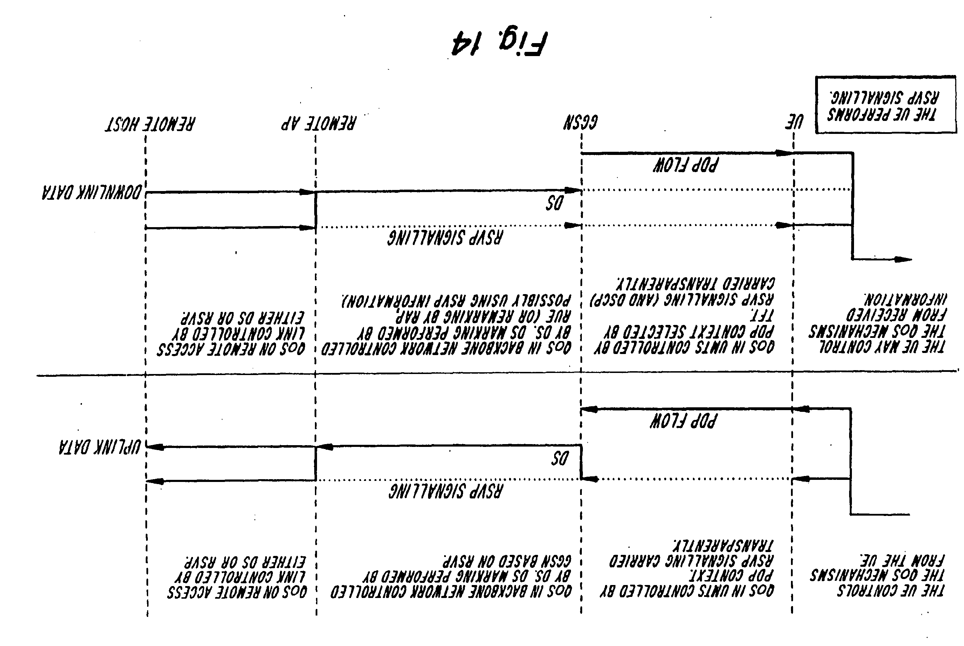

Figure 14 shows the interworking principles in the case the IP signaling (RSVP) is interpreted in GGSN and used for interworking with the backbone. In this case, the UE performs an IP BS function which enables end-to-end QoS using IP layer signaling towards the remote end. However, the UE relies on this end-to-end communication being utilized by at least the access point (GGSN) in order to provide the end-to-end QoS.

In Figure 14, it is assumed that the UE and GGSN support RSVP signaling which may control the QoS directly, or interwork with DiffServ. The backbone IP network may support RSVP. DiffServ, or both.

The terminal may support signaling via the RSVP protocol to control the QoS across the end-to-end path. The GGSN also supports the RSVP signaling, and uses this information rather than the PDP context to control the QoS through the backbone IP network. The control of the QoS through the core is expected to be supported through interworking with DiffServ at the GGSN, although it may optionally be supported by per flow resource reservation. The RSVP signaling protocol may be used for different services. It is only expected that only RSVP using the Integrated Services (IntServ) semantics would be supported, although in the future, new service definitions and semantics may be introduced. The entities that are supporting the RSVP signaling may fully support the specifications for IntServ and IntServ/DiffServ interwork. If not, they are expected to set the break bit.

The control of the QoS over the UMTS access network (from the UE to the GGSN) may be performed either from the terminal using the PDP context signaling. Alternatively, subscription data accessed by the SGSN may override the QoS requested via signaling from the UE.

QoS for the IP layer is performed at two levels. The end-to-end QoS is controlled by the RSVP signaling. Although RSVP signaling occurs end-to-end in the QoS model, it is not necessarily supported by all intermediate nodes. DiffServ is used to provide the QoS throughout the backbone IP network, although optionally each node may support RSVP signaling and allocation of resources per flow.

The GGSN supports the RSVP signaling and acts as the interworking point between RSVP and DiffServ. Intermediate QoS domains may apply QoS according to either the RSVP or DiffServ mechanisms.

The end-to-end QoS is provided by a local mechanism in the UE, the PDP context over the UMTS access network, DiffServ through the backbone IP network, and RSVP in the remote access network in the embodiment shown in the Figure below. The RSVP signaling may control the QoS at the local access. This function may be used to determine the characteristics for the PDP context, so the UE may perform the interwork between RSVP and the PDP context.

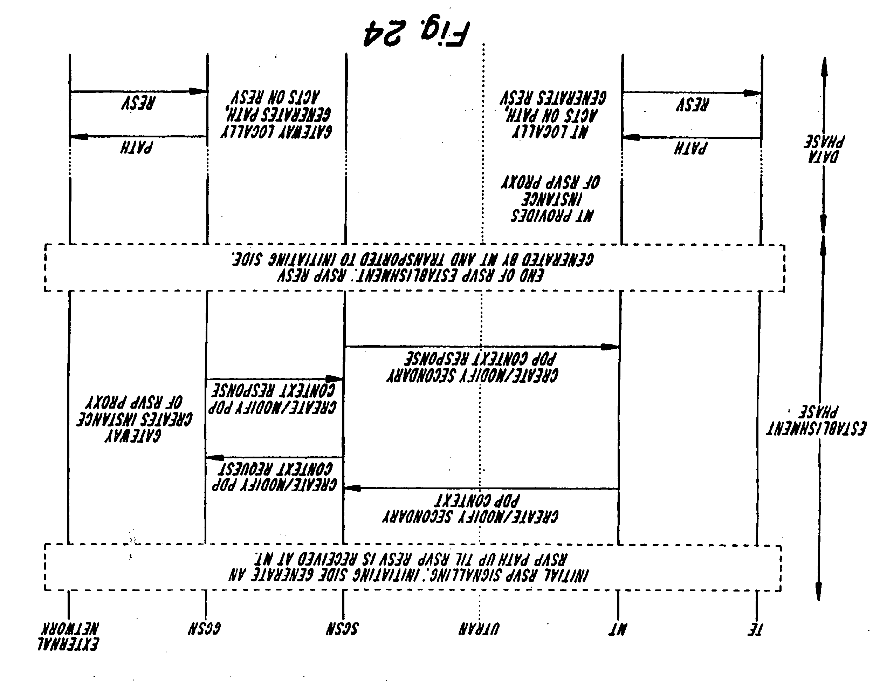

As shown in Figure 24, this embodiment provides a gateway function in GGSN that emulates an RSVP proxy when the user flow enters data phase. The embodiment allows standard applications in a TE, such as lap-tops with a network enabled operating system, such as Microsoft Windows, to use a standard IP signaling mechanism, such as RSVP. During establishment phase, the RSVP signaling is allowed to interwork in the MT as described in the previous embodiment and is signaled end-to-end to allow remote equipment to interact with the UMTS system/terminals. During the data phase, the soft state handling, i.e., regularly generating soft state information for keep alive and other purposes, is done locally in the MT and the GGSN. This embodiment optimizes the radio resources as the IP signaling does not have to be sent over the radio during the data phase. This optimization is accomplished without compromising the end-to-end handling during the establishment phase.

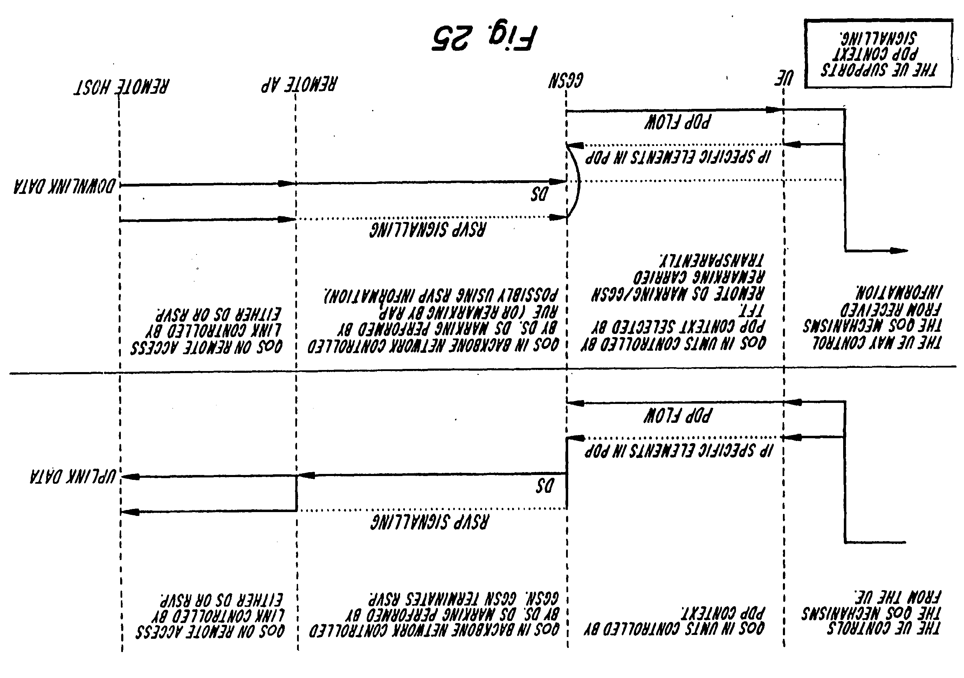

Based on the previous embodiments, the functions may be added to the GGSN and the MT to provide interworking capabilities in the GGSN and the MT. For example, the MT may be provided with an IP BS manager and an interworking function between the IP BS manager and UMTS functions. This allows piggybacking of traffic descriptor and QoS information, generated in IP BS manager, in PDP context activation/modification messages. In addition, the GGSN may be provided with an IP BS manager functionality that may perform Call Admission Control and interwork with other network management components, such as bandwidth brokers. The IP BS manager in the GGSN may also interwork with policy decision functions in the network. The GGSN may be provided with an interworking function between UMTS functions and IP BS manager. Figure 25 shows the interworking principles that apply when GGSN supports and emulates IP signaling towards external network.

In this embodiment, the UE performs an IP BS function which enables end-to-end QoS without IP layer signaling and negotiation towards the IP BS function in the GGSN, or the remote host. The UE provides IP level end-to-end QoS information to the GGSN, using IP specific elements of the context activation/modification message, to enhance the interworking options to an RSVP function in the GGSN. The end-to-end IP QoS bearer service towards the remote host is controlled from the GGSN.

The embodiment assumes that the GGSN supports DiffServ edge functions, and the backbone IP network is DiffServ enabled. This embodiment does not preclude the backbone IP network from having RSVP non-transparent routers.

The GGSN may use the IP specific elements in PDP context activation/modification message to invoke RSVP messages to setup the uplink as well as the downlink flows in the backbone IP network up to the remote host. For example, in the uplink direction, the GGSN may use the IP specific elements in PDP context activation/modification message to generate the RSVP PATH messages, with the desired QoS and traffic specifications, to the specified destination IP address. Also, the GGSN Diffserv edge function may use the IP specific elements in PDP context activation/modification message to select the appropriate DiffServ setting to apply: IP specific elements of the PDP context activation/modification message may be from the UE to the GGSN.

In this embodiment, the control of the QoS over the UMTS access network (from the UE to the GGSN) may be performed either from the terminal using the PDP context signaling. Alternatively, subscription data accessed by the SGSN may override the QoS requested via signaling from the UE.

The QoS for the downlink direction may be controlled by the PDP context between the UE and the GGSN. The GGSN terminates the RSVP signaling received from the remote host, and may use the information in the IP specific elements in PDP context activation/modification message when processing RSVP. The QoS in the uplink direction is controlled by the PDP context up to the GGSN. The GGSN may use the IP specific elements in PDP context activation/modification message to provide the interworking with RSVP towards the remote host. The IP specific elements in PDP context activation/modification message may allow for the establishment of the RSVP session.

The end-to-end QoS is provided by a local mechanism in the UE, the PDP context over the UMTS access network, DiffServ through the backbone IP network, and RSVP in the remote access network.

When designing a UMTS system two requirements have been identified. First, the UMTS QoS negotiation mechanisms used for providing end-to-end QoS shall not make any assumptions about application layer signaling protocols. Second, the UMTS network shall be able to negotiate end-to-end QoS also for mobile terminals and applications that are not able to use QoS negotiation mechanisms other than the ones provided by UMTS.

End-to-end QoS provisioning implies that resources in the external IP network need to be managed by the IP BS Manager in the GGSN. There are different IP resource management techniques available for the IP BS Manager to manage the IP resources, and some of these imply call admission control ("CAC") functionality in the GGSN. In order for the GGSN to exercise CAC, information about the IP traffic (e.g. average and peak rates, required QoS and destination) may be necessary.

The first requirement above implies that the initiating terminal cannot rely on application level signaling to check whether resources are available through the network and at the remote access. It follows that such a resource check must be performed at the bearer level. If the UE does not perform this bearer level request, then the GGSN may need to perform this function, and requires information about the destination IP address in order to perform a CAC decision.

The second requirement listed above implies that end-to-end QoS must be provided even for terminals that do not implement the IP BS Manager functionality and only use UMTS BS Manager (e.g. PDP context signaling) to request resources within the UMTS network.

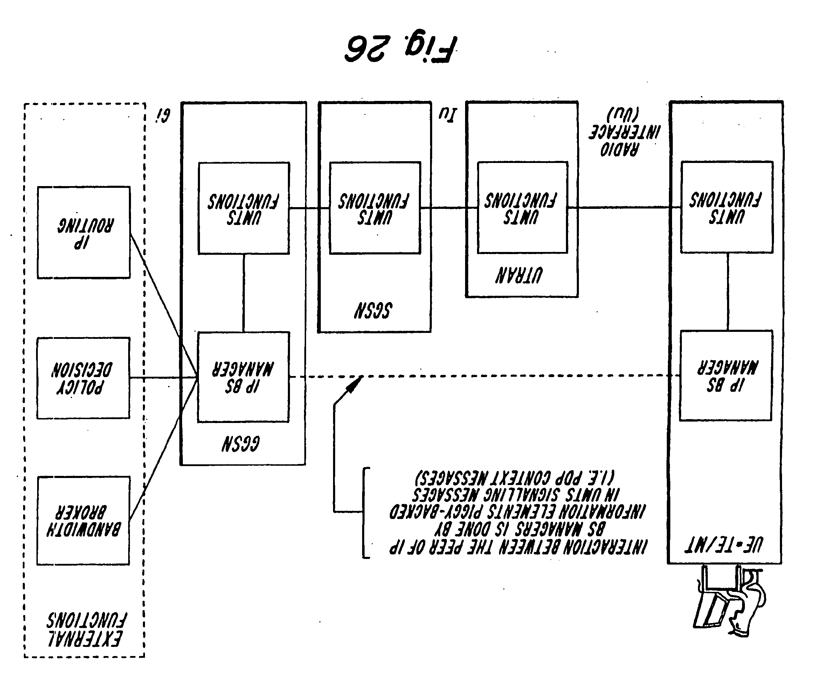

Figure 26 depicts a network block diagram in which interworking functions are supported in the GGSN. In addition to the functions discussed in the previous embodiments, additional functions have been added. For example, external functions are any function in servers or nodes outside UMTS. The bandwidth broker is a function in a node handling the network management of transport resources. It has knowledge of the current resource situation in the network. The IP BS manager may issue a request for resources and the bandwidth broker may either reject the request or confirm it based on the current resource situation in the network. The policy decision function has a corresponding role as the bandwidth broker. The policy decision function incorporates factors in addition to pure resource availability. For example, the policy decision function may use the time of day, application in use, and the destination IP address as factors in allocating bandwidth.

From the requirements and discussion above it follows that the UE may need to signal end-to-end QoS-related information to the GGSN. In this embodiment, end-to-end QoS-related information may be added as a new information attribute to the existing PDP context. This end-to-end QoS attribute may be transparent to the UMTS network and may be piggybacked within the existing PDP context signaling.

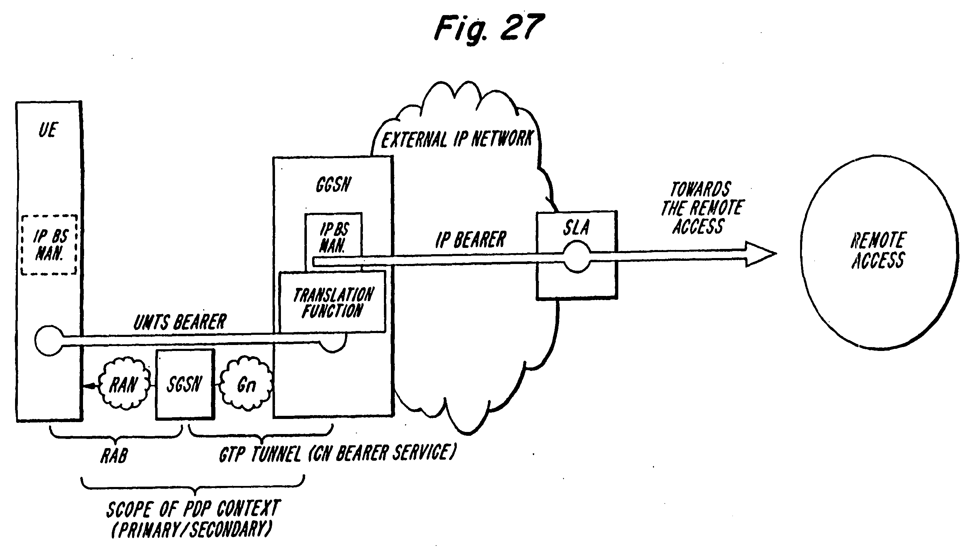

Figure 27 is a schematic diagram of the network model which will be used to describe this embodiment. The appropriate extension of the PDP context depends on the IP BS functionality that is actually implemented in the GGSN. Depending on the scope of the call admission control in the GGSN, we distinguish the following two cases.

In the first case, the CAC is based on the availability of resources over which the GGSN has control. In this case the necessary QoS information may be extracted from the existing PDP context by the Translation Function between the UMTS BS Manager and the IP BS Manager. In order to facilitate efficient IP resource usage and allow for policy decisions based on RSVP parameters, the PDP context could carry additional QoS related information specific to the IP bearer. For instance, such an additional parameter can specify traffic descriptors and QoS descriptors. Such descriptors may be based on the ones associated with standard IP mechanisms, such as the differentiated services or integrated services. Alternatively, these descriptors may be based on the concept of the generic IP bearers.

In the second case, the CAC is additionally based on the resource situation at the egress SLA. In this case, the destination IP address needs to be carried in the PDP context (apart from the descriptors of Case 1).

Interworking, policy control, and admission control are distinct concepts with different goals. However, these may overlap in actual implementation (as one may be dependent on or part of another in the implementation process) and basically involve the same or similar set of RSVP/DS parameters. Which functionalities are implemented at the GGSN is a matter of operator choice. It is envisaged that it will be possible to simultaneously address the three functionalities for lightweight mobiles using a single mechanism involving the IP specific elements in PDP context activation and modification message. For ease of description, this mechanism will be referred to as "UMTS-specific IP QoS mechanism."

The natural requirement for exactness or completeness of the implementation of the above functionalities together with the general guidelines for cleanliness of solution (ensure separation and independence of layers), and for future proofness of solution, although the core principles of good design, have a tendency to make the UMTS-specific IP QoS mechanism more complex, and may defeat the main goal, which is to allow simple lightweight mobile implementations.

It is thus proposed that certain assumptions and restrictions be applied when using the UMTS-specific IP QoS mechanism. These assumptions and restrictions include:
1. One PDP context shall carry at most only one IP level flow per direction (i.e., no multiplexing of uni-directional IP level flows in one PDP context).
2. If the UE desires support of UMTS specific IP QoS mechanism at the GGSN, the following information shall be conveyed by the UE to the GGSN. The UMTS specific IP QoS mechanism shall, however, carry only the minimum subset of information which is not available in UMTS level mechanisms.
   - an indication of the request for UMTS specific IP QoS mechanism support to interwork this with an end-to-end IP level QoS mechanism
   - an indication of the direction of flow
   - a traffic specification which specifies the desired QoS level
   - a filter specification which unambiguously defines the set of data packets or the "flow" in the IP level which will receive the QoS defined in the traffic specification.
3. Indication of the request for UMTS specific IP QoS mechanism support to interwork with an end-to-end IP level QoS mechanism. The UE shall indicate its request for interworking at the GGSN to obtain end-to-end QoS. This indication shall be sent from the UE to the GGSN via the UMTS specific IP QoS mechanism. This indication, however, does not preclude the GGSN from possibly overriding or ignoring the UE request, and it is a matter of operator choice whether to implement interworking, policy control, or admission control, or a combination of these functionalities. Also, if the UE does not require end-to-end QoS or does not care, then this can be implicitly indicated to the GGSN by the absence of UMTS Specific IP QoS Attributes altogether.
4. Indication of flow direction. The UE shall provide information regarding the direction of the flow. This indication can be derived from the UMTS specific IP QoS mechanism indication parameter which shall be possible to set separately for uplink or downlink. Thus, the UMTS specific IP QoS mechanism shall not have to carry explicit indication of flow direction.
5. Traffic specification. To simplify implementation in the lightweight UE, IP level QoS parameters shall be derived from the UMTS Bearer Service Attributes at the GGSN according to the translation function shown in Figure 16. The UE only needs to supply the IP level QoS parameters if the corresponding UMTS level QoS parameters are not available in the PDP context activation / modification message. Furthermore, the set of QoS parameters the UE provides shall be specified to a minimum. The parameters are Peak Data Rate [p], Token Bucket Rate [r], Maximum Packet Size [M], and Token Bucket Size [b]. The definition of the parameters conform with the Token_Bucket_Tspec parameter (service_number 1, parameter 127, as defined in IETF RFC2215). Depending on the IP level mechanism chosen by the GGSN (RSVP or DS) for interworking, policy control, or admission control, the GGSN does the following:
   - RSVP Case: The GGSN shall use the Peak Data Rate [p], Token Bucket Rate [r], Maximum Packet Size [M], and Token Bucket Size [b] parameters provided by the UE. The GGSN shall provide the following parameters where necessary - Minimum Policed Unit [m] (derived from application layer information, e.g., from IP MM CN SS, or a default), QoS Control Service Type (derived from the capabilities of the RSVP host in the GGSN or a default), Rate [R] and Slack Term [S] (derived from the incoming RSVP Path message or a default). The host RSVP implementation in the GGSN is expected to provide the default ADSPEC which would depend on the QoS control services known to the host. Other pertinent initial values in the PATH/RESV message will also be provided by the GGSN (e.g., integrity parameters, policy data, refresh period, style parameter, etc.).
   - DS Case: The GGSN shall use the Token Bucket Rate [r], and Token Bucket Size [b] parameters provided by the UE for setting/configuring the traffic profile (rules for determining whether a particular packet is in-profile or out-of-profile).
6. Filter specification. The UE shall only have to maintain one filter specification which unambiguously defines the set of data packets or the "flow" in the IP level which will receive the QoS defined in the traffic specification. The filter specification shall be used for the TFT in the UMTS level, as well as the filter specification in the IP level. The filter parameters are Source Address, Destination Address, Protocol Number (IPv4) or Next Header (IPv6), Destination Port, Source Port, IPSec Security Parameter Index (SPI), Flow Label (IPv6). Compared to the usage of TFT in TS23.060, there will be additional restrictions specified regarding possible combinations of filter parameters depending on the type or nature of the IP flow (e.g., only one filter is allowed, single port number versus port range, TOS/Traffic Class not included, etc.). The restrictions should be specified in a separate document as it is beyond the scope of TS23.107.
   - Downlink Case: downlink TFT's shall correspond to the IP level filter specification for the downlink direction. This may involve additional restriction on the parameters in the downlink TFT's. Thus, the UMTS specific IP QoS mechanism shall not have to carry downlink TFT's.
   - Uplink Case: uplink TFT's shall correspond to the IP level filter specification for the uplink direction. This may involve additional restriction on the parameters in the uplink TFT's. Since current UMTS GPRS specification confines the uplink TFT's in the UE, the UMTS specific IP QoS mechanism shall carry the uplink TFT's from the UE to the GGSN. The filter parameters involved will use the same definition/usage as TFT defined in TS23.060.

Note that an application instance resident in the lightweight UE will not itself participate in the end-to-end QoS control process and will not specify which QoS control service type (for RSVP) or PHB (for DS) is used. The application will provide a baseline traffic specification and a filter specification to the UE. It will be up to the GGSN to choose the appropriate IP level mechanism to use. How the GGSN makes the choice (whether the UE indicates preference, or if APN dependent, or policy from upper layers, or by default) is for further study.

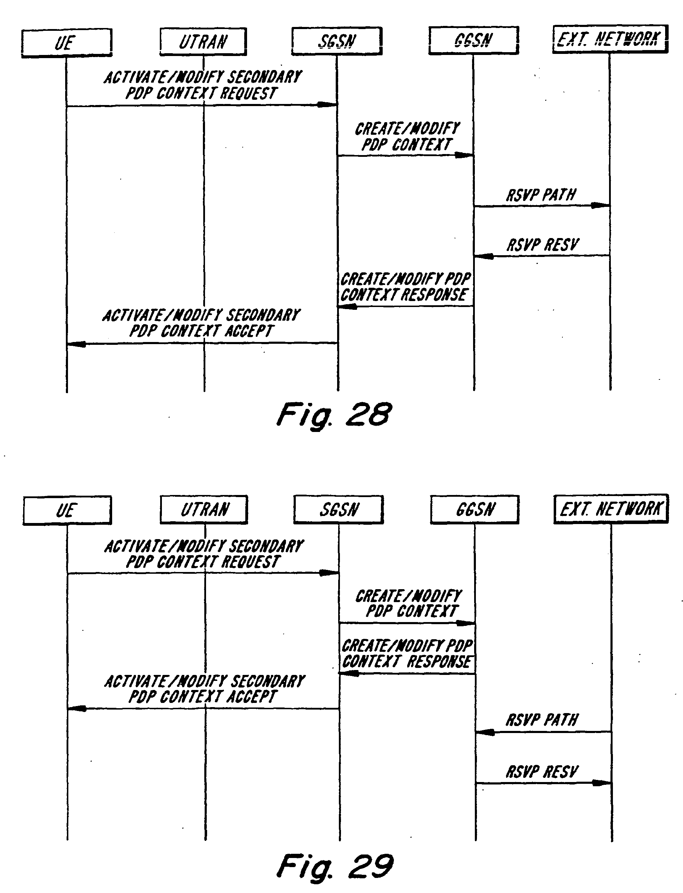

The UE provides IP-level end-to-end QoS information to the GGSN using IP specific elements in PDP activation/modification message, and the GGSN uses this information to invoke RSVP messages to setup the uplink as well as the downlink flows. RSVP signaling is generated and terminated by the GGSN as shown in Figures 28 and 29. In these figures, the association between the RSVP PATH message and the PDP context is carried out in the GGSN.

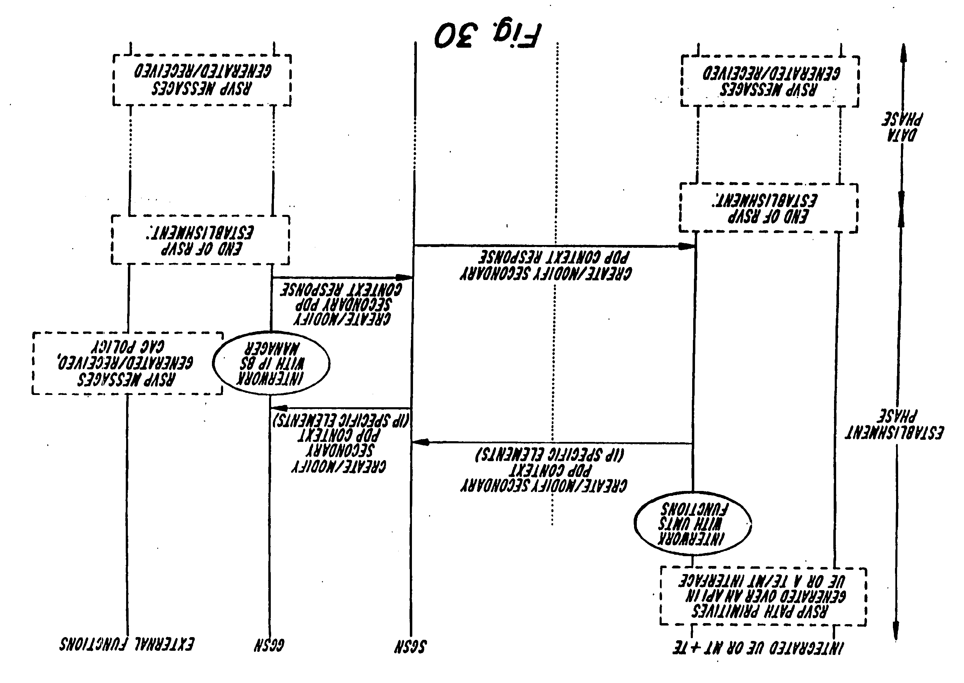

Figure 30 shows the phases of a bearer setup. The different interworking aspects are discussed below with reference to the phases.

As in the previous embodiments, one aspect of interworking is the mapping of information in one protocol to the information in another protocol. For example, the traffic descriptor and QoS definitions may be mapped as follows.

When the UE initiates the establishment phase, the traffic descriptor that are received or generated in the PATH or RESV procedure of IP BS manager in the UE are mapped to the corresponding attribute in IP specific element and sent in PDP context activation or modification message. When the UE terminates the establishment phase, the UE receives a create or modify secondary PDP context response and the traffic descriptor-related attributes may be mapped to corresponding RSVP elements. The RSVP elements may be used by the IP BS manager in the RESV processing in UE.

As shown in Figure 28, when GGSN receives the traffic descriptor in the IP specific element, it is mapped to RSVP traffic descriptor and used in the RSVP PATH message towards the external network. It may also be mapped to attributes used for Call Admission Control and policy.

The traffic descriptor that is received in the RESV message to the IP BS manager in the GGSN may be mapped to an UMTS attribute in PDP context activation/modification response message. It may also be mapped to attributes used for Call Admission Control and policy.

In Figure 29, when the GGSN receives the traffic descriptor in the IP specific element of PDP context activation/modification message, it is mapped to RSVP traffic descriptor and used in the RSVP RESV message sent towards external equipment. It may also be mapped to attributes used for Call Admission Control and policy.

The traffic descriptor of a received RSVP PATH message may be mapped to corresponding attribute in PDP context activation/modification response message. It may also be mapped to attributes used for Call Admission Control and policy.

Similarly, when the UE initiates the establishment phase, the QoS attributes that are received or generated in the RESV procedure of IP BS manager in the UE are mapped to the corresponding attribute in the IP specific element and sent in a PDP context ,activation or modification message. When the UE terminates the establishment phase, the UE receives a create or modify secondary PDP context response and the UMTS QoS attributes may be mapped to corresponding RSVP elements and used by the IP BS manager in the RSVP RESV processing in UE.

As shown in Figure 28, RSVP QoS attributes that are received in the RSVP RESV message to the IP BS manager in the GGSN are mapped to a UMTS QoS attribute in PDP context activation/modification response message. It may also be mapped to attributes used for Call Admission Control and policy.

In Figure 29, when the GGSN receives the QoS attributes of the PDP context activation or modification message, it is mapped to the RSVP QoS and used in the RSVP RESV message sent towards external equipment. It may also be mapped to attributes used for Call Admission Control and policy.

Another aspect of interworking involves using events in the state machine of one side of the interworking to trigger actions in the function of the other side of the interworking. For example, when the UE initiates the establishment phase, the RSVP initiation procedures (RSVP PATH procedure) of IP BS manager in the UE triggers a PDP context activation/modification message to be sent uplink. The reception of a create or modify secondary PDP context response triggers a RSVP RESV processing in the UE and ends the establishment phase.

As shown in Figure 28, when the GGSN receives a PDP context activation or modification message with a IP specific element stating RSVP interworking, this triggers the initiation of an RSVP host in the IP BS manager of GGSN and a RSVP PATH message is sent towards the external network. In this manner, a call admission control may be performed to decide if the bearer can be accepted. The call admission control procedure may involve interworking with a bandwidth broker or a policy decision server.

Reception of RSVP RESV message in the IP BS manager in the GGSN triggers a PDP context activation or modification response message to be sent and ends the establishment phase. In this manner, a call admission control may be performed to decide if the bearer can be accepted. The call admission control procedure may involve interworking with a bandwidth broker or a policy decision server.

In Figure 29, the reception of a PDP context activation or modification message with a IP specific element stating RSVP interworking triggers the initiation of an RSVP host in IP BS manager of GGSN. In this manner, a call admission control may be performed to decide if the bearer can be accepted. The call admission control procedure may involve interworking with a bandwidth broker or a policy decision server.

The reception of a RSVP PATH message triggers a state transition from idle to establishment phase. Depending on the message sequence, it may also trigger a PDP context activation or modification response message to be sent.

When the RSVP host is initiated or an IP BS manager of the GGSN has entered establishment phase, an RSVP RESV message is sent towards the external equipment. In this manner, a call admission control may be performed to decide if the bearer can be accepted. The call admission control procedure may involve interworking with bandwidth broker or a policy decision server.

Interworking may also involve the use of information received at the ingress side of the interworking to configure shaping or marking of the egress side of the interworking. For example, in the case of interworking involving the IP BS manager of GGSN uplink traffic, the traffic received according to a PDP context traffic contract and traffic descriptor may be marked and shaped to conform to the configuration and means of the external network. The algorithm responsible for shaping and marking may also take into account the characteristics for the PDP context flow.

When handling interworking in the IP BS manager of GGSN downlink traffic, the downlink packets may be filtered and shaped according to possible marking of the IP packets before transported as a PDP context flow. The IP BS manager performs interworking between specific marking of received packets and the QoS characteristics of a specific PDP context flow.

Specifically for lightweight UEs which cannot support IP layer signaling and negotiation towards the IP BS function in the GGSN, the transfer of IP level QoS information from the UE to the GGSN is needed for a variety of purposes, including the enhancement of interworking options for DS and RSVP in GGSN and facilitating policy control and admission control ("AC") at the GGSN.

This embodiment also combines some of the merits of the first two embodiments. Specifically, radio resources are saved without compromising the end-to-end concept of IP level signaling. In addition, this embodiment offloads the complexity of two bearer level QoS handling in the UE and thus facilitates development of highly optimized and low power consuming mobile terminals.

Compared with the previous embodiment, this embodiment has the advantage of fully following the principles established for IP signaling, without introducing the need for signaling QoS at two different levels in the GGSN or TE/MT.

In some applications, it may be desirable to provide interworking between IP BS manager function and the DiffServ function. This can be accomplished by modifying the previous embodiment so that the GGSN does not provide an IP signaling host functionality. The IP BS manager will only provide interworking to means for traffic aggregation, such as the DiffServ.

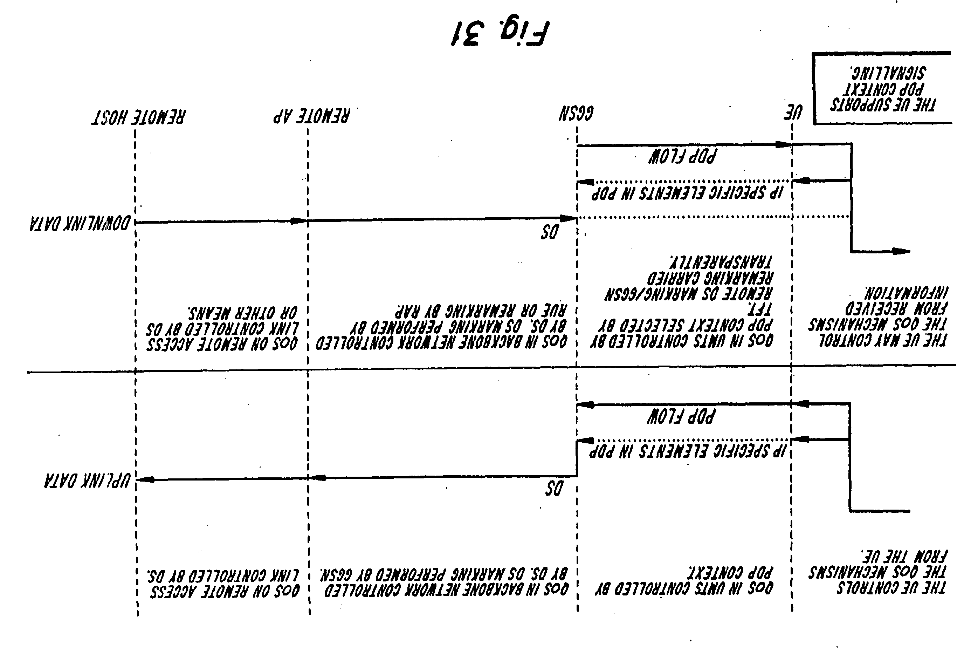

As shown in Figure 31, the UE performs an IP BS function which enables end-to-end QoS without IP layer signaling and negotiation towards the IP BS function in the GGSN, or the remote host. The UE provides IP specific information to the GGSN, using IP specific elements of the PDP context activation or modification message, to enhance the interworking options to the DiffServ edge function of the GGSN. This embodiment assumes that the GGSN support DiffServ edge functions and that the backbone IP network is DiffServ enabled.

The GGSN DiffServ edge function may use the IP specific information for the DiffServ classifier functionality, such as a combination of source and destination IP address, source and destination port number, and the protocol identifier. The information can also be used for DiffServ class admission control, such as the requested end-to-end bandwidth from the UE for a particular flow may be informed to the GGSN beforehand for the GGSN DiffServ edge to determine if the flow can be allowed to a certain DiffServ class or an egress point. As a result, the GGSN may select the appropriate DiffServ setting to apply. The IP specific elements of PDP context activation or modification message that are transferred from the UE to the GGSN, which were discussed in relation to the previous embodiments, may exist for this embodiment as well.

In this embodiment, the control of the QoS over the UMTS access network (from the UE to the GGSN) may be performed from the terminal using the PDP context signaling. Alternatively, subscription data accessed by the SGSN may override the QoS requested via signaling from the UE.

The QoS for the downlink direction is controlled by the remote host from the remote network to the GGSN. The PDP context controls the UMTS level QoS between the GGSN and the UE. The QoS in the uplink direction is controlled by the PDP context up to the GGSN. The GGSN uses the IP specific elements of UMTS signaling to interwork with DiffServ in the backbone IP network and controlling the IP QoS bearer service towards the remote host.

The end-to-end QoS is provided by a local mechanism in the UE, the PDP context over the UMTS access network, DiffServ through the backbone IP network, and DiffServ in the remote access network. Note that DiffServ control at the Remote Host is shown in this example. However, other mechanisms may be used at the remote end, as demonstrated in the other embodiments.

IP level signaling, such as RSVP, is yet not widely deployed. A lightweight solution using the most frequently used DiffServ paradigm is therefore beneficial.

The invention has been described with respect to several embodiments. In light of this disclosure, those skilled in the art will likely make alternate embodiments of this invention, such as the inclusion of additional tasks or the use of alternate networking equipment. These and other alternate embodiments are intended to fall within the scope of the claims that follow.

## Claims

1. A method for a mobile terminal for providing support for IP signaling, wherein the mobile terminal is in communication with a local user's terminal equipment and is also in communication with a radio network, the method comprising the steps of:
terminating a PATH message transmitted by the user's terminal equipment;
determining whether to create a new PDP context or modify an existing PDP context based on the RSVP parameters contained in the PATH message; and
transmitting a request to create or modify the PDP context through the radio network.

2. The method of claim 1, further comprising the steps of:
receiving a response to the request to create or modify a PDP context from the radio network;
generating a RESV message based on the response; and transmitting the RESV message to the terminal equipment.

3. The method of claim1, further comprising the steps of:
instantiating an RSVP proxy in a mode which terminates the IP signaling, whereby the
RSVP proxy terminates PATH messages received from the terminal equipment and generates a
RESV response based on the PATH message.

4. The method of claim 3, further comprising the steps of:
receiving a message from the radio network;
determining from the message whether an application in the terminal equipment requires RSVP signaling;
generating a PATH message;
transmitting the PATH message to the terminal equipment;
receiving a RESV message from the terminal equipment; determining requirements for a PDP context; and
transmitting a request to create or modify the PDP context through the radio network.

5. A method for a mobile terminal for providing support for IP signaling, wherein the mobile terminal is in communication with a local user's terminal equipment and is also in communication with a radio network, the method comprising the steps of:
receiving a message from the radio network;
determining from the message whether an application in the terminal equipment requires RSVP signaling; generating a PATH message;
transmitting the PATH message to the terminal equipment;
receiving a RESV message from the terminal equipment; determining requirements for a PDP context; and
transmitting a request to create or modify the PDP context through the radio network.

6. The method of claim 5, further comprising the steps of:
running a timer appropriate for RSVP procedures; and
transmitting the PATH message to the terminal equipment when the timer expires.

7. A method for a mobile terminal for providing support for IP signaling, wherein the mobile terminal is in communication with a local user's terminal equipment and is also in communication with a radio network, the method comprising the steps of:
receiving a PATH message transmitted by the user's terminal equipment;
modifying the PATH message according to a local configuration;
transmitting the modified PATH message to the radio network;
receiving a RESV message from the radio network in response to the PATH message;
determining whether to create a new PDP context or modify an existing PDP context based on RSVP parameters contained in the RESV message;
transmitting a request to create or modify the PDP context through the radio network;
receiving a response to the request to create or modify a PDP context from the radio network; and
transmitting the RESV message to the terminal equipment.

8. A method for a mobile terminal for providing support for IP signaling, wherein the mobile terminal is in communication with a local user's terminal equipment and is also in communication with a radio network, the method comprising the steps of:
receiving a PATH message from the radio network; transmitting the PATH message to the terminal equipment;
receiving a RESV message from the terminal equipment; determining from the RESV message the requirements for a PDP context;
transmitting a request to create or modify the PDP context through the radio network;
receiving a response to the request to create or modify the PDP context from the radio network; and
transmitting the RESV message to the radio network.

9. A method to include IP QoS information in a PDP context and to carry the QoS information through a UMTS network, the method comprising the steps of:
including the QoS information in the PDP context; and interworking between the QoS information and RSVP in a GGSN.

10. A mobile terminal providing support for IP signaling, wherein the mobile terminal is adapted to communicate with a local user's terminal equipment and is adapted to communicate with a radio network, whereby the mobile terminal comprises:
means for terminating a PATH message transmitted by the user's terminal equipment;
means for determining whether to create a new PDP context or modify an existing PDP context based on the RSVP parameters contained in the PATH message; and
means for transmitting a request to create or modify the PDP context through the radio network.

11. A mobile terminal providing support for IP signaling, wherein the mobile terminal is adapted to communicate with a local user's terminal equipment and is also adapted to communicate with a radio network, whereby the mobile terminal comprises:
means for receiving a message from the radio network;
means for determining from the message whether an application in the terminal equipment requires RSVP signaling;
means for generating a PATH message;
means for transmitting the PATH message to the terminal equipment;
means for receiving a RESV message from the terminal equipment;
means for determining requirements for a PDP context; and
means for transmitting a request to create or modify the PDP context through the radio network.

12. A mobile terminal providing support for IP signaling, wherein the mobile terminal is adapted to communicate with a local user's terminal equipment and is also adapted to communicate with a radio network, whereby the mobile terminal comprises:
means for receiving a PATH message transmitted by the user's terminal equipment;
means for modifying the PATH message according to a local configuration;
means for transmitting the modified PATH message to the radio network;
means for receiving a RESV message from the radio network in response to the PATH message;
means for determining whether to create a new PDP context or modify an existing PDP context based on RSVP parameters contained in the RESV message;
means for transmitting a request to create or modify the PDP context through the radio network;
means for receiving a response to the request to create or modify a PDP context from the radio network; and
means for transmitting the RESV message to the terminal equipment.

13. A mobile terminal providing support for IP signaling, wherein the mobile terminal is adapted to communicate with a local user's terminal equipment and is also adapted to communicate with a radio network, whereby the mobile terminal comprises:
means for receiving a PATH message from the radio network;
means for transmitting the PATH message to the terminal equipment;
means for receiving a RESV message from the terminal equipment;
means for determining from the RESV message the requirements for a PDP context;
means for transmitting a request to create or modify the PDP context through the radio network;
means for receiving a response to the request to create or modify the PDP context from the radio network; and
means for transmitting the RESV message to the radio network.

## Patentansprüche

1. Verfahren für ein mobiles Endgerät zum Bereitstellen von Unterstützung für IP-Signalisierung, wobei das mobile Endgerät in Kommunikation mit einer Endeinrichtung eines lokalen Benutzers steht und außerdem in Kommunikation mit einem Funknetz steht, wobei das Verfahren die folgenden Schritte umfasst:
Beenden einer PATH-Nachricht, die von der Endeinrichtung des Benutzers gesendet wurde;
Bestimmen, ob ein neuer PDP-Kontext erzeugt oder ein existierender PDP-Kontext geändert werden soll, auf der Basis der in der PATH-Nachricht enthaltenen RSVP-Parameter; und
Senden einer Anforderung über das Funknetz den PDP-Kontext zu erzeugen oder zu ändern.

2. Verfahren nach Anspruch 1, welches ferner die folgenden Schritte umfasst:
Empfangen einer Antwort von dem Funknetz auf die Anforderung einen PDP-Kontext zu erzeugen oder zu ändern;
Erzeugen einer RESV-Nachricht auf der Basis der Antwort; und
Senden der RESV-Nachricht zu der Endeinrichtung.

3. Verfahren nach Anspruch 1, welches ferner die folgenden Schritte umfasst:
Instanzieren eines RSVP-Proxys in einem Modus, welcher die IP-Signalisierung beendet, wobei der RSVP-Proxy PATH-Nachrichten beendet, die von der Endeinrichtung empfangen wurden, und eine RESV-Antwort auf der Basis der PATH-Nachricht erzeugt.

4. Verfahren nach Anspruch 3, welches ferner die folgenden Schritte umfasst:
Empfangen einer Nachricht von dem Funknetz;
Bestimmen aus der Nachricht, ob eine Anwendung in der Endeinrichtung RSVP-Signalisierung erfordert;
Erzeugen einer PATH-Nachricht;
Senden der PATH-Nachricht an die Endeinrichtung;
Empfangen einer RESV-Nachricht von der Endeinrichtung;
Bestimmen von Anforderungen für einen PDP-Kontext; und
Senden einer Anforderung über das Funknetz den PDP-Kontext zu erzeugen oder zu ändern.

5. Verfahren für ein mobiles Endgerät zum Bereitstellen von Unterstützung für IP-Signalisierung, wobei das mobile Endgerät in Kommunikation mit einer Endeinrichtung eines lokalen Benutzers steht und außerdem in Kommunikation mit einem Funknetz steht, wobei das Verfahren die folgenden Schritte umfasst:
Empfangen einer Nachricht von dem Funknetz;
Bestimmen aus der Nachricht, ob eine Anwendung in der Endeinrichtung RSVP-Signalisierung erfordert;
Erzeugen einer PATH-Nachricht;
Senden der PATH-Nachricht zu der Endeinrichtung;
Empfangen einer RESV-Nachricht von der Endeinrichtung;
Bestimmen von Anforderungen für einen PDP-Kontext; und
Senden einer Anforderung über das Funknetz den PDP-Kontext zu erzeugen oder zu ändern.

6. Verfahren nach Anspruch 5, welches ferner die folgenden Schritte umfasst:
Ablaufen lassen eines Timers, der für RSVP-Prozeduren geeignet ist; und
Senden der PATH-Nachricht an die Endeinrichtung, wenn der Timer abläuft.

7. Verfahren für ein mobiles Endgerät zum Bereitstellen von Unterstützung für IP-Signalisierung, wobei das mobile Endgerät in Kommunikation mit einer Endeinrichtung eines lokalen Benutzers steht und außerdem in Kommunikation mit einem Funknetz steht, wobei das Verfahren die folgenden Schritte umfasst:
Empfangen einer PATH-Nachricht, die von der Endeinrichtung des Benutzers gesendet wurde;
Ändern der PATH-Nachricht entsprechend einer lokalen Konfiguration;
Senden der geänderten PATH-Nachricht an das Funknetz;
Empfangen einer RESV-Nachricht von dem Funknetz als Antwort auf die PATH-Nachricht;
Bestimmen, ob ein neuer PDP-Kontext erzeugt oder ein existierender PDP-Kontext geändert werden soll, auf der Basis von in der RESV-Nachricht enthaltenen RSVP-Parameter;
Senden einer Anforderung über das Funknetz den PDP-Kontext zu erzeugen oder zu ändern;
Empfangen einer Antwort von dem Funknetz auf die Anforderung einen PDP-Kontext zu erzeugen oder zu ändern; und
Senden der RESV-Nachricht an die Endeinrichtung.

8. Verfahren für ein mobiles Endgerät zum Bereitstellen von Unterstützung für IP-Signalisierung, wobei das mobile Endgerät in Kommunikation mit einer Endeinrichtung eines lokalen Benutzers steht und außerdem in Kommunikation mit einem Funknetz steht, wobei das Verfahren die folgenden Schritte umfasst:
Empfangen einer PATH-Nachricht von dem Funknetz;
Senden der PATH-Nachricht an die Endeinrichtung;
Empfangen einer RESV-Nachricht von der Endeinrichtung;
Bestimmen der Anforderungen für einen PDP-Kontext aus der RESV-Nachricht;
Senden einer Anforderung über das Funknetz den PDP-Kontext zu erzeugen oder zu ändern;
Empfangen einer Antwort von dem Funknetz auf die Anforderung den PDP-Kontext zu erzeugen oder zu ändern; und
Senden der RESV-Nachricht an das Funknetz.

9. Verfahren zum Einbinden von IP QoS-Information in einen PDP-Kontext und zum Transportieren der QoS-Information über ein UMTS-Netz, wobei das Verfahren die folgenden Schritte umfasst:
Einbinden der QoS-Information in den PDP-Kontext; und
Interworking zwischen QoS-Information und RSVP in einem GGSN.

10. Mobiles Endgerät, das Unterstützung für IP-Signalisierung bereitstellt, wobei das mobile Endgerät in der Lage ist, mit einer Endeinrichtung eines lokalen Benutzers zu kommunizieren, und in der Lage ist, mit einem Funknetz zu kommunizieren, wobei das mobile Endgerät umfasst:
Mittel zum Beenden einer PATH-Nachricht, die von der Endeinrichtung des Benutzers gesendet wurde;
Mittel zum Bestimmen, ob ein neuer PDP-Kontext erzeugt oder ein existierender PDP-Kontext geändert werden soll, auf der Basis der in der PATH-Nachricht enthaltenen RSVP-Parameter; und
Mittel zum Senden einer Anforderung über das Funknetz den PDP-Kontext zu erzeugen oder zu ändern.

11. Mobiles Endgerät, das Unterstützung für IP-Signalisierung bereitstellt, wobei das mobile Endgerät in der Lage ist, mit einer Endeinrichtung eines lokalen Benutzers zu kommunizieren, und außerdem in der Lage ist, mit einem Funknetz zu kommunizieren, wobei das mobile Endgerät umfasst:
Mittel zum Empfangen einer Nachricht von dem Funknetz;
Mittel zum Bestimmen aus der Nachricht, ob eine Anwendung in der Endeinrichtung RSVP-Signalisierung erfordert;
Mittel zum Erzeugen einer PATH-Nachricht;
Mittel zum Senden der PATH-Nachricht an die Endeinrichtung;
Mittel zum Empfangen einer RESV-Nachricht von der Endeinrichtung;
Mittel zum Bestimmen von Anforderungen für einen PDP-Kontext; und
Mittel zum Senden einer Anforderung über das Funknetz den PDP-Kontext zu erzeugen oder zu ändern.

12. Mobiles Endgerät, das Unterstützung für IP-Signalisierung bereitstellt, wobei das mobile Endgerät in der Lage ist, mit einer Endeinrichtung eines lokalen Benutzers zu kommunizieren, und außerdem in der Lage ist, mit einem Funknetz zu kommunizieren, wobei das mobile Endgerät umfasst:
Mittel zum Empfangen einer PATH-Nachricht, die von der Endeinrichtung des Benutzers gesendet wurde;
Mittel zum Ändern der PATH-Nachricht entsprechend einer lokalen Konfiguration;
Mittel zum Senden der geänderten PATH-Nachricht an das Funknetz;
Mittel zum Empfangen einer RESV-Nachricht von dem Funknetz in Reaktion auf die PATH-Nachricht;
Mittel zum Bestimmen, ob ein neuer PDP-Kontext erzeugt oder ein existierender PDP-Kontext geändert werden soll, auf der Basis von in der RESV-Nachricht enthaltenen RSVP-Parametern;
Mittel zum Senden einer Anforderung, den PDP-Kontext zu erzeugen oder zu ändern, über das Funknetz;
Mittel zum Empfangen einer Antwort auf die Anforderung, einen PDP-Kontext zu erzeugen oder zu ändern, von dem Funknetz; und
Mittel zum Senden der RESV-Nachricht an die Endeinrichtung.

13. Mobiles Endgerät, das Unterstützung für IP-Signalisierung bereitstellt, wobei das mobile Endgerät in der Lage ist, mit einer Endeinrichtung eines lokalen Benutzers zu kommunizieren, und außerdem in der Lage ist, mit einem Funknetz zu kommunizieren, wobei das mobile Endgerät umfasst:
Mittel zum Empfangen einer PATH-Nachricht von dem Funknetz;
Mittel zum Senden der PATH-Nachricht an die Endeinrichtung;
Mittel zum Empfangen einer RESV-Nachricht von der Endeinrichtung;
Mittel zum Bestimmen der Anforderungen für einen PDP-Kontext aus der RESV-Nachricht;
Mittel zum Senden einer Anforderung über das Funknetz den PDP-Kontext zu erzeugen oder zu ändern;
Mittel zum Empfangen einer Antwort von dem Funknetz auf die Anforderung den PDP-Kontext zu erzeugen oder zu ändern; und
Mittel zum Senden der RESV-Nachricht an das Funknetz.

## Revendications

1. Procédé pour un terminal mobile afin de fournir une assistance pour la signalisation IP, dans lequel le terminal mobile est en communication avec un équipement terminal d'un utilisateur local et est également en communication avec un réseau radio, le procédé comprenant les étapes de:
terminer un message PATH transmis par l'équipement terminal de l'utilisateur;
déterminer s'il faut créer un nouveau contexte PDP ou modifier un contexte PDP existant, en se basant sur les paramètres RSVP contenus dans le message PATH; et
transmettre une demande pour créer ou modifier le contexte PDP à travers le réseau radio.

2. Procédé selon la revendication 1, comprenant en outre les étapes de:
recevoir une réponse à la demande en vue de créer ou de modifier un contexte PDP provenant du réseau radio;
générer un message RESV basé sur la réponse; et
transmettre le message RESV vers l'équipement terminal.

3. Procédé selon la revendication 1, comprenant en outre les étapes de:
former une instance d'un proxy RSVP dans un mode qui termine la signalisation IP, le proxy RSVP terminant ainsi les messages PATH reçus de l'équipement terminal et générant une réponse RESV basée sur le message PATH.

4. Procédé selon la revendication 3, comprenant en outre les étapes de:
recevoir un message provenant du réseau radio;
déterminer d'après le message si une application dans l'équipement terminal nécessite une signalisation RSVP;
générer un message PATH;
transmettre le message PATH vers l'équipement terminal;
recevoir un message RESV provenant de l'équipement terminal;
déterminer des conditions requises d'un contexte PDP et
transmettre une demande en vue de créer ou de modifier le contexte PDP à travers le réseau radio.

5. Procédé pour un terminal mobile afin de fournir une assistance pour la signalisation IP, dans lequel le terminal mobile est en communication avec un équipement terminal d'un utilisateur local et est également en communication avec un réseau radio, le procédé comprenant les étapes de:
recevoir un message provenant du réseau radio;
déterminer d'après le message si une application dans l'équipement terminal requéri une signalisation RSVP;
générer un message PATH;
transmettre le message PATH vers l'équipement terminal;
recevoir un message RESV provenant de l'équipement terminal;
déterminer les conditions requises d'un contexte PDP et
transmettre une demande en vue de créer ou de modifier le contexte PDP à travers le réseau radio.

6. Procédé selon la revendication 5, comprenant en outre les étapes de:
faire fonctionner un compteur convenant aux procédures RSVP; et
transmettre le message PATH vers l'équipement terminal au cas où le compteur expire.

7. Procédé pour un terminal mobile afin de fournir une assistance pour la signalisation IP, dans lequel le terminal mobile est en communication avec un équipement terminal d'un utilisateur local et est également en communication avec un réseau radio, le procédé comprenant les étapes de:
recevoir un message PATH transmis par l'équipement terminal de l'utilisateur;
modifier le message PATH selon une configuration locale;
transmettre le message PATH modifié vers le réseau radio;
recevoir un message RESV provenant du réseau radio en réponse au message PATH;
déterminer s'il faut créer un nouveau contexte PDP ou modifier un contexte PDP existant, en se basant sur des paramètres RSVP contenus dans le message RESV;
transmettre une demande en vue de créer ou modifier le contexte PDP à travers le réseau radio;
recevoir une réponse à la demande en vue de créer ou de modifier un contexte PDP provenant du réseau radio; et
transmettre le message RESV à l'équipement terminal.

8. Procédé pour un terminal mobile afin de fournir une assistance pour la signalisation IP, dans lequel le terminal mobile est en communication avec un équipement terminal d'un utilisateur local et est également en communication avec un réseau radio, le procédé comprenant les étapes de:
recevoir un message PATH provenant du réseau radio;
transmettre le message PATH vers l'équipement terminal;
recevoir un message RESV provenant de l'équipement terminal;
déterminer d'après le message RESV les conditions requises d'un contexte PDP;
transmettre une demande en vue de créer ou de modifier le contexte PDP à travers le réseau radio;
recevoir une réponse à la demande en vue de créer ou de modifier le contexte PDP provenant du réseau radio; et
transmettre le message RESV au réseau radio.

9. Procédé pour inclure des informations IP QoS dans un contexte PDP et pour véhiculer les informations QoS à travers un réseau UMTS, le procédé comprenant les étapes de:
inclure les informations QoS dans le contexte PDP; et
opérer mutuellement entre les informations QoS et RSVP dans un GGSN.

10. Terminal mobile fournissant une assistance pour la signalisation IP, dans lequel le terminal mobile est adapté afin de communiquer avec un équipement terminal d'un utilisateur local et est adapté afin de communiquer avec un réseau radio, le terminal mobile comprenant:
des moyens pour terminer un message PATH transmis par l'équipement terminal de l'utilisateur;
des moyens pour déterminer s'il faut créer un nouveau contexte PDP ou modifier un contexte PDP existant an se basant sur les paramètres RSVP contenus dans le message PATH; et
des moyens pour transmettre une demande en vue de créer ou de modifier le contexte PDP à travers le réseau radio.

11. Terminal mobile fournissant une assistance pour la signalisation IP, dans lequel le terminal mobile est adapté afin de communiquer avec un équipement terminal d'un utilisateur local et est adapté également afin de communiquer avec un réseau radio, le terminal mobile comprenant:
des moyens pour recevoir un message provenant du réseau radio;
des moyens pour déterminer d'après le message si une application dans l'équipement terminal requéri une signalisation RSVP;
des moyens pour générer un message PATH;
des moyens pour transmettre le message PATH vers l'équipement terminal;
des moyens pour recevoir un message RESV provenant de l'équipement terminal;
des moyens pour déterminer des conditions requises d'un contexte PDP; et
des moyens pour transmettre une demande en vue de créer ou de modifier le contexte PDP à travers le réseau radio.

12. Terminal mobile fournissant une assistance pour la signalisation IP, dans lequel le terminal mobile est adapté afin de communiquer avec un équipement terminal d'un utilisateur local et est adapté également afin de communiquer avec un réseau radio, le terminal mobile comprenant:
des moyens pour recevoir un message PATH transmis par l'équipement terminal de l'utilisateur;
des moyens pour modifier le message PATH selon une configuration locale;
des moyens pour transmettre le message PATH modifié vers le réseau radio;
des moyens pour recevoir un message RESV provenant du réseau radio en réponse au message PATH;
des moyens pour déterminer s'il faut créer un nouveau contexte PDP ou modifier un contexte PDP existant an se basant sur des paramètres RSVP contenus dans le message RESV;
des moyens pour transmettre une demande en vue de créer ou de modifier le contexte PDP à travers le réseau radio;
des moyens pour recevoir une réponse à la demande en vue de créer ou de modifier un contexte PDP provenant du réseau radio; et
des moyens pour transmettre le message RESV vers l'équipement terminal.

13. Terminal mobile fournissant une assistance pour la signalisation IP, dans lequel le terminal mobile est adapté afin de communiquer avec un équipement terminal d'un utilisateur local et est adapté également afin de communiquer avec un réseau radio, le terminal mobile comprenant:
des moyens pour recevoir un message PATH provenant du réseau radio;
des moyes pour transmettre le message PATH vers l'équipement terminal;
des moyens pour recevoir un message RESV provenant de l'équipement terminal;
des moyens pour déterminer d'après le message RESV les conditions requises d'un contexte PDP;
des moyens pour transmettre une demande en vue de créer ou de modifier le contexte PDP à travers le réseau radio;
des moyens pour recevoir une réponse à la demande en vue de créer ou de modifier le contexte PDP provenant du réseau radio; et
des moyens pour transmettre le message RESV vers le réseau radio.
